# FASCICULE DE BREVET EUROPEEN

(11) **EP 3 402 626 B1**
(45) Date de publication et mention de la délivrance du brevet: **19.08.2020**
(21) Numéro de dépôt: 17700242.5
(22) Date de dépôt: 11.01.2017
(51) Int. Cl.: B23K 26/342, B33Y 10/00

(54) **PROCÉDÉ ET INSTALLATION DE FABRICATION D'UN OBJET TRIDIMENSIONNEL**
VERFAHREN UND ANLAGE ZUR HERSTELLUNG EINES DREIDIMENSIONALEN OBJEKTES
METHOD AND FACILITY FOR MANUFACTURING A THREE-DIMENSIONAL OBJECT

(30) Priorité: 12.01.2016 FR 1650220
(43) Date de publication de la demande: 21.11.2018
(73) Titulaire: Inetyx, 63119 Châteaugay (FR)
(72) Inventeur: TEULET, Patrick, 63200 Riom (FR)
(74) Mandataire: Lavoix
(86) Numéro de dépôt international: PCT/EP2017/050455
(87) Numéro de publication internationale: WO 2017/121746

(56) Documents cités:
- EP-A1- 1 400 339
- EP-A1- 2 591 876
- DE-A1-102014 206 143
- US-A- 4 772 773

## Description

La présente invention concerne un procédé de fabrication d'un objet tridimensionnel. Elle concerne également une installation correspondante permettant de mettre en oeuvre ce procédé de fabrication.

Fabriquer un objet tridimensionnel par ajout de matière couche par couche est bien connu, en particulier par frittage et/ou fusion, sous l'effet d'un faisceau laser ou d'un faisceau d'électrons, d'une poudre métallique ou céramique. Les procédés de fabrication correspondants sont aujourd'hui largement proposés dans divers secteurs industriels, tels que l'aéronautique, l'automobile, l'industrie équipementière, la bijouterie, la joaillerie, l'horlogerie, le domaine médical, la recherche, etc.

Ces procédés de fabrication représentent des enjeux importants, tant sur le plan technique, en lien notamment avec l'augmentation des performances et avec la miniaturisation des fonctions, que sur le plan économique, en lien notamment avec les coûts et délais de réalisation et la flexibilité pour la mise sur le marché de nouveaux produits, voire sur le plan stratégique, afin de développer de nouveaux concepts et de nouveaux matériaux.

Les procédés connus présentent un certain nombre d'inconvénients et/ou de limitations, tant du point de vue de leur mise en oeuvre que du point de vue des caractéristiques techniques des objets tridimensionnels fabriqués.

Les difficultés ou la complexité de mise en oeuvre sont liées à l'utilisation de matériaux pulvérulents, étalés en couche fine afin d'établir et de maîtriser le lit de poudre dans lequel la pièce est fabriquée de façon itérative couche par couche. Les matériaux pulvérulents, c'est-à-dire à l'état de poudre de faible granulométrie, typiquement de l'ordre de quelques micromètres de diamètre de grain, sont difficiles à fabriquer de façon industrielle. Outre les coûts de fabrication et des hauts niveaux d'investissement à prévoir, les difficultés sont liées à la dangerosité des produits du fait de leur volatilité générant des risques de contamination de l'environnement et des risques d'explosion. Des difficultés apparaissent également lors d'opérations de recyclage des poudres, du fait que, lors de la mise en œuvre des procédés de fabrication, des déchets, notamment des fumées composées de particules nanométriques, sont produits. Ces difficultés entrainent la mise en place de modalités de fonctionnement complexes, afin d'assurer la maîtrise et le maintien des caractéristiques métallurgiques dans le temps vis-à-vis des objectifs visés et qualifiés, ainsi qu'afin de garantir des aspects liés à la sécurité de fonctionnement des machines de mise en oeuvre des procédés et la santé des utilisateurs. Par ailleurs, la production des poudres, notamment métalliques, nécessitent la mise en oeuvre de moyens industriels conséquents, de type tour d'atomisation, matériel de broyage, matériel de sélection de tamisage pour la maîtrise de la granulométrie, matériel d'analyse physicochimique, matériel de séchage et matériel de conditionnement. L'ensemble de ces moyens induit des investissements et des coûts de production élevés : le prix du kilogramme de poudre métallique est cinq à dix fois celui de la même nuance métallurgique en format standard, typiquement en barre, en lingot ou sous forme de fils. De surcroît, la physique des poudres limite l'efficacité de l'énergie thermique fournie par un faisceau laser, du fait de l'importance des surfaces spécifiques induisant une forte réactivité des poudres lors de l'interaction avec le faisceau laser : ce phénomène se traduit par une sublimation partielle de la matière, pouvant modifier la composition chimique de cette matière, des changements de phase et/ou des défauts de structure métallurgique, typiquement des porosités ou des microfissures à l'intérieur des volumes fabriqués. L'ensemble de ces phénomènes limite le potentiel de productivité vis-à-vis de l'énergie laser disponible.

De façon générale, l'augmentation de la productivité des procédés de fabrication par frittage et/ou fusion laser de poudres, céramiques et/ou métalliques, diminue les qualités dimensionnelles, géométriques et d'état de surface des objets tridimensionnels fabriqués. Cette situation est un facteur limitant quant à l'amélioration globale des performances techniques et économiques de ce genre de procédé de fabrication.

Ainsi, EP 1 400 339 divulgue un procédé de fabrication couche par couche d'une pièce complète tridimensionnelle. Selon ce procédé, chaque couche de matière est déposée sur une couche précédemment réalisée ou, à défaut de cette dernière, sur un support métallique plan. Chaque couche de matière peut être une couche de poudre compactée ou bien un feuillard métallique. Dans tous les cas, afin de fusionner localement chaque couche de matière successivement déposée, des faisceaux lasers balayent cette couche de matière, d'un bord de cette dernière jusqu'au bord opposé. Ce procédé présente les mêmes limitations de qualité que celles expliquées en détail plus haut.

Le but de la présente invention est de proposer un procédé de fabrication additive qui soit innovant et de rupture vis-à-vis des procédés de fabrication additive couche par couche de poudre.

A cet effet, l'invention a pour objet un procédé de fabrication d'un objet tridimensionnel, tel que défini à la revendication 1. L'invention a également pour objet une installation de fabrication d'un objet tridimensionnel, qui est telle que définie à la revendication 12 et qui permet de mettre en oeuvre le procédé de fabrication précité.

Ainsi, le procédé de fabrication conforme à l'invention consiste à fabriquer un objet tridimensionnel, de façon itérative couche après couche, en prévoyant, pour chaque couche, de déposer un ou plusieurs feuillards métalliques puis de souder ce ou ces feuillards, les opérations de soudure pouvant être par exemple mises en oeuvre par application d'un faisceau laser et/ou par résistance. Afin de répondre aux exigences de finition le cas échéant, le procédé selon l'invention est avantageusement complété par des opérations d'enlèvement partiel de matière, par abrasion, usinage ou ablation laser, comme expliqué plus en détail dans la partie descriptive ultérieure.

Une caractéristique importante du procédé conforme à l'invention consiste à déposer et à souder un feuillard de façon progressive et itérative, notamment à l'aide d'un laser et/ou d'une électrode pour soudure par résistance. La fusion progressive et itérative du feuillard est prévue pour en contrôler et en conserver les caractéristiques physicochimiques, en particulier les caractéristiques géométriques du métal déposé. Le dépôt et la soudure répétés du ou des feuillards d'une couche donnée aboutissent à réaliser une section bidimensionnelle, homogène et dense à coeur, de l'objet tridimensionnel à fabriquer, cette couche présentant une épaisseur correspondant à celle du feuillard ou des feuillards juxtaposés de cette couche, cette épaisseur étant par exemple comprise entre 10 et 500 µm pour un mode de réalisation préférentiel. Pour des raisons de productivité, en association avec une puissance de fusion adaptée, notamment une puissance laser adaptée, des feuillards présentant une épaisseur supérieure, par exemple de 1 mm, voir atteignant 2 mm, peuvent être utilisés.

Pour bien comprendre un aspect essentiel de l'invention, on notera qu'un grand nombre de procédés de rechargement par fusion avec un faisceau laser et/ou une électrode sont connus : ces procédés de soudure sont utilisés dans l'industrie pour la soudure et/ou le rechargement, en particulier pour la réparation de pièces mécaniques avec, si besoin, des reprises d'usinage après soudure. Dans ces procédés de soudure connus, l'électrode ou le faisceau laser utilisés fusionnent la totalité d'une section d'un fil métallique constituant un métal d'apport. Cette méthode d'apport de métal par fusion d'un fil ne permet pas de maîtriser la géométrie du volume de matière fusionnée, car la totalité d'une section de matière est fusionnée. Autrement dit, ce phénomène de fusion totale ne permet pas d'élaborer une géométrie contrôlée sans reprise d'usinage systématique afin de reconstruire à chaque instant la géométrie précitée. Or, on gardera à l'esprit que fabriquer par ajout de matière un objet tridimensionnel repose sur un principe itératif de solidification d'une quantité de matière, typiquement pulvérulente, sous forme d'une couche la plupart du temps, constituant une référence géométrique pour la fabrication de la couche suivante. Chaque couche solidifiée correspond à une section d'un objet tridimensionnel à fabriquer. En conséquence, la maîtrise de la géométrie d'une couche de matière solidifiée constituant une partie d'un objet tridimensionnel à fabriquer est fondamentale pour une fabrication conforme de cet objet : si tel n'est pas le cas, c'est l'ensemble de la géométrie de l'objet à fabriquer qui n'est pas conforme, autrement dit l'objet tridimensionnel dans sa totalité. Compte tenu, pour les procédés de soudage connus précités, de la non maîtrise à chaque instant de la géométrie d'un métal fusionné et déposé, il serait très contraignant et non rentable d'utiliser ces procédés pour fabriquer de façon complète des pièces par ajout de matière.

Dans le cas de la présente invention, le procédé de fabrication permet de réaliser des pièces par ajout de matière à l'état solide, en utilisant un feuillard de matière métallique. En pratique, un tel feuillard est une bande de métal, généralement de section transversale rectangulaire, de sorte que, pour réaliser une nouvelle couche d'un objet à fabriquer, l'invention prévoit une soudure sans apport et uniquement partielle du ou des feuillards de la couche, par fusion partielle de ce ou ces feuillards après leur dépôt sur un substrat métallique, ce dernier étant la couche précédemment réalisée ou, à défaut de celle-ci, un support métallique ad hoc : conformément à l'invention, notamment sous l'effet d'un faisceau laser ou d'une électrode de soudure par résistance, seulement une portion de la partie du ou de chaque feuillard, appuyée sur le substrat, est fusionnée et soudée avec le substrat, tout en prenant soin que le reste de cette partie, qui n'a pas été fusionné, conserve la géométrie d'arête de cette partie et demeure en appui contre le substrat.

Le procédé conforme à l'invention s'adresse à l'ensemble des secteurs manufacturés, tant pour une utilisation dans un mode de production unitaire d'un objet tridimensionnel, que pour une utilisation dans un mode industriel pour la réalisation de petites, moyennes et grandes séries. Ce procédé offre la possibilité de réaliser des objets tridimensionnels en matière métallique, mono ou multi matériaux métalliques, et selon des niveaux de finition dimensionnels et géométriques de type « Qualité 7 » et de rugosité de surface Ra de l'ordre de 1,6 voire 0,8 pour des surfaces fonctionnelles préidentifiées de l'objet tridimensionnel à fabriquer.

Des caractéristiques additionnelles avantageuses du procédé et/ou de l'installation de fabrication conformes à l'invention sont spécifiées aux autres revendications.

L'invention sera mieux comprise à la lecture de la description qui va suivre, donnée uniquement à titre d'exemple et faite en se référant aux dessins sur lesquels :
- la figure 1 est une vue en perspective schématique d'une installation de fabrication conforme à l'invention, mettant en oeuvre une première étape de dépôt du procédé de fabrication conforme à l'invention ;
- la figure 2 est une vue à plus grande échelle du détail cerclé II à la figure 1 ;
- la figure 3 est une vue similaire à la figure 2, montrant la mise en œuvre d'une première étape de fusion du procédé de fabrication ;
- la figure 4 est une vue en élévation selon la flèche IV de la figure 3 ;
- la figure 5 est une section selon la ligne V-V de la figure 4 ;
- la figure 6 est une vue similaire à la figure 3, illustrant une deuxième étape de fusion du procédé ;
- la figure 7 est une vue en élévation selon la flèche VII de la figure 6 ;
- la figure 8 est une section selon la ligne VIII-VIII de la figure 7 ;
- la figure 9 est une vue similaire à la figure 7, illustrant le résultat de la répétition de plusieurs étapes de dépôt et de fusion du procédé ;
- les figures 10 à 13 sont des vues similaires aux figures 4, 7 et 9, illustrant des étapes de dépôt et de fusion du procédé, subséquentes à celles montrées jusqu'ici ;
- la figure 14 est une vue similaire à la figure 13, illustrant une opération de soudure du procédé ;
- la figure 15 est une vue similaire à la figure 14, illustrant une étape de découpe du procédé ;
- la figure 16 est une vue en élévation selon la flèche XVI de la figure 15 ;
- la figure 17 est une vue similaire à la figure 16, illustrant une étape de rectification du procédé ;
- la figure 18 est une vue à plus grande échelle du détail cerclé XVIII sur la figure 17 ;
- la figure 19 est une vue similaire à la figure 15, montrant la couche résultant de la mise en oeuvre des différentes opérations illustrées par les figures 1 à 18 ;
- les figures 20 à 26 sont des vues similaires aux figures 4, 7 et 10 à 13, illustrant la réalisation d'une couche superposée à la couche de la figure 19 ;
- les figures 27 et 28 sont des vues respectivement similaires aux figures 15 et 16, illustrant la mise en oeuvre d'une étape de découpe du procédé pour la couche superposée à celle de la figure 19 ;
- la figure 29 est une vue similaire à la figure 19, montrant la couche résultant de la mise en oeuvre des étapes illustrées par les figures 20 à 28 ;
- les figures 30 à 33 sont des vues similaires aux figures 4, 7, 10 à 13 et 20 à 26, illustrant la réalisation d'une couche superposée à celle montrée à la figure 29 ;
- les figures 34 et 35 sont des vues respectivement similaires aux figures 15 et 16 ou 27 et 28, illustrant la mise en oeuvre d'une étape de découpe du procédé pour la couche superposée à celle de la figure 29 ;
- la figure 36 est une vue similaire à la figure 34, illustrant une opération d'usinage du procédé ; et
- la figure 37 est une vue en élévation selon la flèche XXXVII de la figure 36.

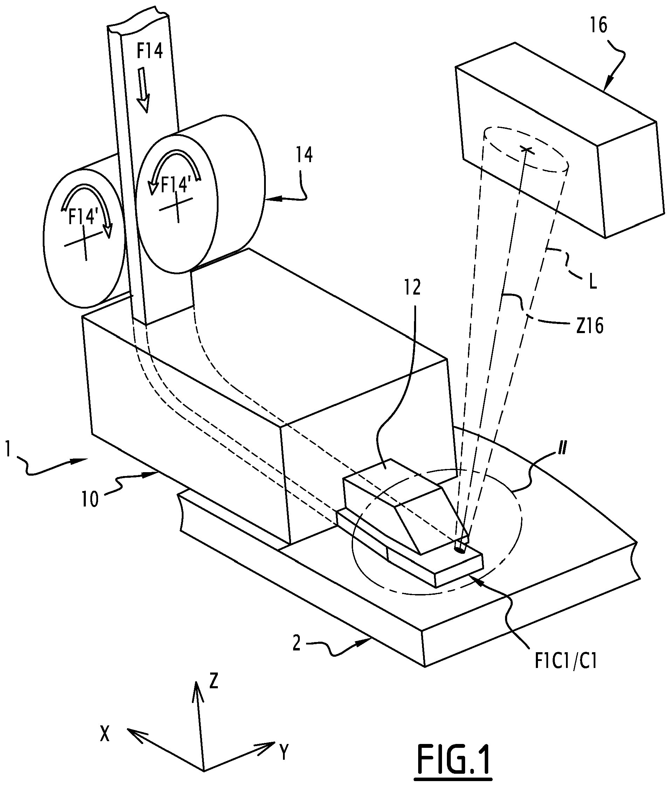

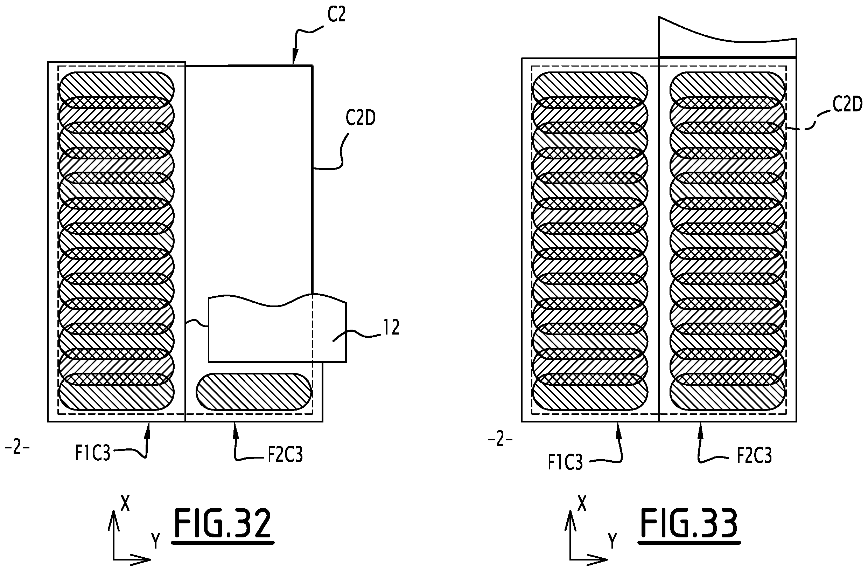

Sur les figures 1 à 37 est illustré un procédé de fabrication additive d'un objet tridimensionnel O. Dans l'exemple de réalisation considéré sur ces figures, ce procédé de fabrication est mis en oeuvre par l'intermédiaire d'une installation de fabrication 1.

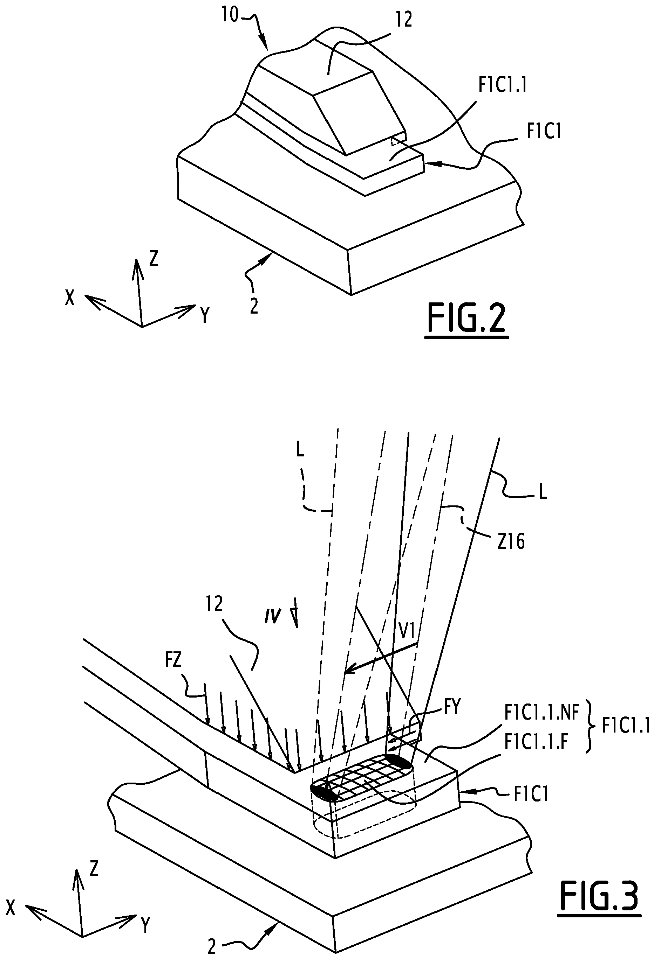

Comme représenté plus en détail sur les figures 1 et 2, l'installation 1 comporte un dispositif 10 conçu pour réaliser des couches planes superposées, constitutives de l'objet O à fabriquer, chaque couche nouvellement réalisée par le dispositif 10 étant superposée, selon un axe géométrique Z qui est perpendiculaire aux plans respectifs des couches, à une couche précédemment réalisée ou, à défaut de cette dernière, à un support métallique plan 2 qui est perpendiculaire à l'axe Z-Z. Dans la suite de la présente description, ainsi que sur les figures, l'axe Z est considéré comme s'étendant à la verticale, mais cette orientation n'est pas limitative de l'invention.

Comme expliqué progressivement par la suite, chaque couche de l'objet O, réalisée par le dispositif 10 est formée à partir de feuillards métalliques, qui sont juxtaposés dans le plan de la couche concernée, en occupant chacun toute l'épaisseur de cette couche, c'est-à-dire toute la dimension de cette dernière selon l'axe Z. En pratique, chacun de ces feuillards se présente sous la forme d'une bande métallique, qui est à section transversale rectangulaire et dont l'épaisseur est bien inférieure à ses deux autres dimensions, en étant typiquement au minimum environ de cinq à dix fois plus petite que sa largeur et en valant notamment entre 5 µm et 2 mm, de préférence entre 10 µm et 1 mm. Avant leur utilisation par l'installation 1 en vue de fabriquer l'objet O, ces feuillards sont par exemple mis à disposition sous forme d'une ou de plusieurs bobines, tout ou partie des feuillards non encore individualisé pouvant être sous forme d'une longue bande commune. Les bobines précitées et, plus généralement, les feuillards précités sont des produits du commerce peu onéreux, généralement fabriqués par laminage et disponibles en une très grande variété de nuances métallurgiques.

Sur les figures 1 à 19, l'installation 1, en particulier son dispositif 10, est, comme expliqué plus en détail ci-après, utilisé pour réaliser une première couche C1 de l'objet O. Plus spécifiquement, sur les figures 1 à 9, on réalise, au moyen du dispositif 10, une partie de la couche C1 à partir d'un premier feuillard, référencé F1C1. Pour ce faire, on met en œuvre une première étape de dépôt, par laquelle le feuillard F1C1 est déposé sur le support 2, comme représenté sur les figures 1 et 2. A cet effet, dans l'exemple de réalisation considéré sur les figures, le dispositif 10 comprend une buse 12 de guidage et de positionnement du feuillard F1C1 : à la sortie de cette buse 12, une partie longitudinale terminale F1C1.1 du feuillard F1C1, qui émerge de la buse 12 selon un axe géométrique X perpendiculaire à l'axe Z, est disposée en contact plan avec le support 2, perpendiculairement à l'axe Z. Ainsi, sous l'action de la buse 12, la direction longitudinale du feuillard F1C1 s'étend, au moins au niveau de sa partie terminale F1C1.1, selon l'axe X et les deux faces principales du feuillard F1C1, qui sont opposées l'une à l'autre et entre lesquelles est définie l'épaisseur du feuillard, s'étendent, au moins au niveau de la partie terminale F1C1.1, perpendiculairement à l'axe Z. Aussi, la face principale du feuillard tournée vers le support 2 s'étend, au moins au niveau de la partie terminale F1C1.1, dans un plan géométrique qui est sensiblement confondu avec le plan géométrique dans lequel s'étend la face plane, tournée vers la buse 12, du support 2.

Suivant une disposition avantageuse pratique, le dispositif 10 comprend également un système 14 d'admission du feuillard F1C1, qui est conçu pour entrainer le feuillard dans la direction longitudinale de ce dernier, au moins dans le sens d'introduction du feuillard en entrée de la buse 12, comme indiqué par la flèche F14 sur la figure 1. A titre d'exemple non limitatif, qui est montré à la figure 1, ce système 14 comporte des galets rotatifs motorisés, qui sont agencés tangentiellement contre respectivement les faces principales opposées du feuillard F1C1 et dont la rotation sur eux-mêmes, indiqué par les flèches F14' sur la figure 1, met le feuillard en mouvement dans sa direction longitudinale.

De plus, le dispositif 10 intègre des éléments de guidage de précision, en particulier des guidages linéaires, ainsi que des mécanismes d'entraînement fin, tels que des systèmes à vis à billes et écrous, animés par des moteurs notamment de type brushless. Ces éléments de guidage et mécanismes d'entrainement, qui ne sont pas représentés sur les figures, permettent de positionner le dispositif 10, en particulier sa buse 12, selon à la fois l'axe Z, l'axe X et un troisième axe géométrique Y perpendiculaire aux axes Z et X. En pratique, grâce à leur précision de guidage et à leur finesse d'entrainement, les éléments de guidage et mécanismes d'entrainement précités garantissent une répétabilité de positionnement de quelques micromètres d'erreur, ainsi qu'une répétabilité de contrôle en vitesse de déplacement. Le cas échéant, l'action du système d'admission 14 est synchronisée avec le déplacement selon l'axe X du dispositif 10, en particulier de sa buse 12. Ainsi, la précision de positionnement du feuillard F1C1 par le dispositif 10 est préférentiellement comprise entre 5 et 10 µm selon les trois axes X, Y et Z.

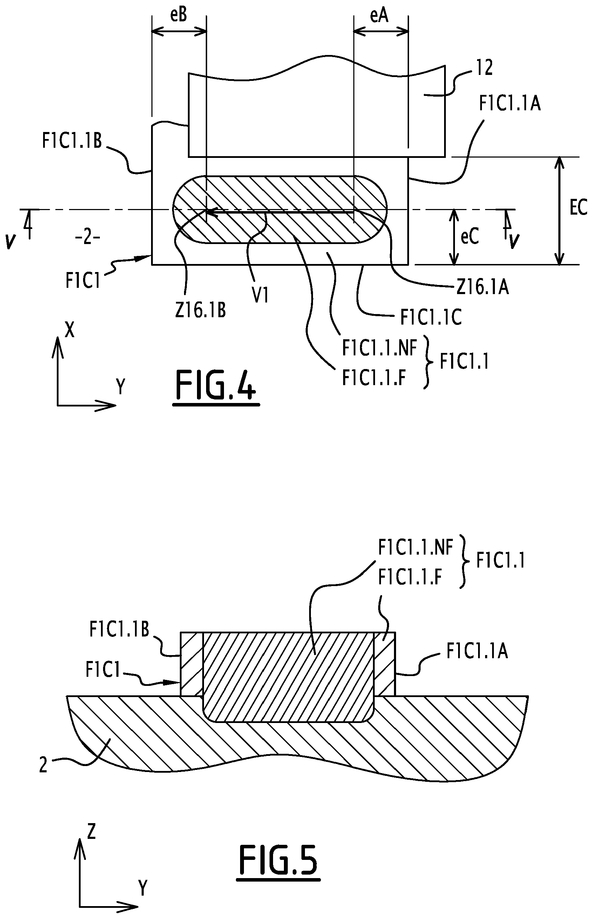

Au début de la mise en oeuvre de la première étape de dépôt, le dispositif 10, en particulier sa buse 12 et son système d'admission 14, est, grâce aux aménagements décrits ci-dessus, commandé en position de sorte que :
- selon l'axe Z, la buse 14 applique à la partie du feuillard F1C1 avec laquelle cette buse est en contact, un effort FZ qui, comme représenté sur la figure 3, est dirigé vers le support 2, de façon que la partie terminale F1C1.1 du feuillard F1C1 soit plaquée, selon l'axe Z, en contact contre le support 2 avec une intensité minimale prédéterminée afin d'assurer un contact plan complet entre les faces, tournées l'une vers l'autre selon l'axe Z, de, respectivement, la partie F1C1.1 du feuillard F1C1 et le support 2 ;
- selon l'axe Y, la buse 12 applique à la partie du feuillard F1C1 avec laquelle cette buse est en contact, un effort FY, qui est représenté schématiquement sur la figure 3 et qui est indépendant de l'effort FZ, de manière à positionner selon l'axe Y la partie F1C1.1 du feuillard F1C1, en particulier les deux bords libres opposés F1C1.1A et F1C1.1B de cette dernière, disposés perpendiculairement à l'axe Y et référencés sur les figures 4 et 5 ; et
- selon l'axe X, la partie F1C1.1 du feuillard F1C1 est positionnée de manière prédéterminée, en particulier avec son bord libre F1C1.1C, disposé perpendiculairement à l'axe X, qui est distant de la buse 12 d'une valeur EC indiquée sur la figure 4.

Le positionnement et l'appui de la partie F1C1.1 du feuillard F1C1 sur le support 2, spécifiés juste ci-dessus, sont maintenus pendant toute la durée de la première étape de dépôt.

Par ailleurs, au cours de la première étape de dépôt, un faisceau laser L est appliqué à la partie F1C1.1 du feuillard F1C1 de manière à la fusionner uniquement partiellement et à ainsi la souder au support 2. A cet effet, le dispositif 10 comprend un laser 16, représenté schématiquement sur la figure 1, qui est conçu pour émettre le faisceau laser L, en le centrant sur un axe Z16, et pour déplacer ce faisceau laser L dans l'espace, par déplacement correspondant de son axe Z16.

Le laser 16 relève d'une technologie connue en soi : il s'agit par exemple d'un laser à fibre. La longueur d'onde, continue ou modulée, du faisceau laser L est adaptée à la nuance métallurgique du feuillard à fusionner : à titre d'exemples non limitatifs, ce rayonnement est choisi dans l'infrarouge, typiquement entre 1060 et 1080 nm, lorsque les feuillards sont à base de fer, en particulier à base d'acier, ou à base d'aluminium, ou d'autres matières métalliques absorbant ce type de rayonnement, tandis que cette longueur d'onde est plus adaptée avec un rayonnement dit vert, typiquement compris entre 520 et 532 nm, lorsque les feuillards sont à base de cuivre ou de certains de ses alliages. Plus généralement, la longueur d'onde du laser 16 est adaptée afin de satisfaire à des objectifs de faisabilité et de productivité.

Au sein de l'installation de fabrication 1, le laser 16 est prévu pour orienter l'axe Z16 de son faisceau laser L parallèlement à l'axe Z et pour déplacer cet axe Z16 parallèlement à l'axe Y, tout en maîtrisant la précision du positionnement de cet axe Z16 dans l'espace, en particulier vis-à-vis de la partie F1C1.1 du feuillard F1C1 à laquelle ce faisceau laser L est appliqué lors d'une première étape de fusion, réalisée au cours de la première étape de dépôt. Plus précisément, comme représenté sur les figures 3 à 5, pendant toute la première étape de fusion, l'axe Z16 du faisceau laser L intersecte la partie F1C1.1 du feuillard F1C1, en passant, au début de la première étape de fusion, d'une position Z16.1A, à, à la fin de la première étape de fusion, une position Z16.1 B. Les deux positions Z16.1A et Z16.1 B sont alignées selon l'axe Y et constituent respectivement l'origine et l'extrémité d'un vecteur V1 selon lequel est déplacé l'axe Z16 du faisceau laser L entre le début et la fin de la première étape de fusion. La position Z16.1A, qui est plus proche du bord F1C1.1A de la partie F1.C1.1 du feuillard F1C1 que le bord F1C1.1B, est disposée, d'une part, selon l'axe Y, à une distance non nulle du bord F1C1.1A, valant eA, et, d'autre part, selon l'axe X à une distance non nulle du bord F1C1.1C de la partie F1C1.1 du feuillard F1C1, valant eC. On comprend que, selon l'axe X, la position Z16.1A est située à une distance de la buse 12, correspondant à la différence entre les valeurs EC et eC, cette distance étant prévue la plus faible possible, tout en évitant l'interaction entre le faisceau laser L et la buse 12, en valant par exemple 200 µm environ, de sorte que la soudure par fusion, réalisée par application du faisceau laser L est faite au plus proche de l'action d'appui mécanique de la buse 12 sur le feuillard F1C1 selon l'axe Z. La situation selon l'axe X de la position Z16.1 B est identique à celle de la position Z16.1A, du fait que le vecteur V1 s'étend parallèlement à l'axe Y, tandis que, selon l'axe Y, la position Z16.1B est située à une distance non nulle du bord F1C1.1B de la partie F1C1.1 du feuillard F1C1, en valant eB. Selon une variante spécifique de réalisation, qui n'est pas représentée, et selon le cas échéant une largeur de feuillard F1C1 spécifique, les positions de Z16.1A et Z16.1 B peuvent être confondues ; cela peut par exemple être le cas pour un feuillard de faible largeur.

Lors de la mise en oeuvre de la première étape de fusion, le faisceau laser L fusionne seulement une portion F1C1.1.F de la partie F1C1.1 du feuillard F1C1, en soudant par transparence cette portion F1C1.1.F au support 2, comme montré sur la figure 5. Comme cette soudure est réalisée au plus proche de l'effort FZ d'appui de la buse 12 sur le feuillard F1C1, une continuité métallurgique est assurée entre la portion fusionnée F1C1.1.F du feuillard et le support 2. De plus, les valeurs eA, eB et eC, relatives aux positions Z16.1A et Z16.1 B de l'axe Z16 du faisceau laser L déplacé selon le vecteur V1, sont prévues pour respecter deux conditions limites, à savoir que :
- ces valeurs eA, eC et eB sont suffisamment grandes pour que l'interaction du faisceau laser L avec la partie F1C1.1 du feuillard F1C1 ne fusionne pas les bords F1C1.1A, F1C1.1B et F1C1.1C, afin de ne pas perdre la géométrie d'enveloppe, autrement dit les arrêtes, de la partie F1C1.1, et
- ces valeurs eA, eB, et eC sont suffisamment petites pour que la portion non fusionnée F1C1.1.NF de la partie F1C1.1, qui entoure la partie fusionnée F1C1.F dans le plan des axes X et Y, ne se déforme pas, notamment dans la direction de l'axe Z, ce qui provoquerait une perte de contact mécanique et donc métallurgique entre la partie F1C1.1 du feuillard F1C1 et le support 2.

En d'autres termes, à l'issue de la première étape de fusion, la portion non fusionnée F1C1.1.NF, qui est constituée par ce qui n'a pas été fusionnée dans la partie F1C1.1, inclut les bords F1C1.1A, F1C1.1B et F1C1.C de cette partie F1C1.1 et est toujours en contact du support 2.

En pratique, afin de satisfaire les conditions limites précitées, chacune des valeurs eA, eB et eC précitées peuvent être telles que :
(½ épaisseur de F1C1 + ½ largeur d'interaction de L) < eA, eB, eC < (épaisseur de F1C1 + ½ largeur d'interaction de L),
la largeur d'interaction précitée correspondant à la dimension, selon l'axe X, du faisceau laser L dans le plan occupé par la partie F1C1.1 du feuillard F1C1.

Bien entendu, la relation ci-dessus s'applique à la fois à eA et à eB lorsque toute largeur du feuillard déposé est utilisée, tandis que lorsque la largeur du feuillard déposé n'est pas toute utilisée, l'une des valeurs eA et eB peut être bien plus grande que l'autre. Il y a bien lieu de comprendre que la relation ci-dessus n'est donnée qu'à titre indicatif car elle évolue en fonction de la nature métallurgique de la matière du feuillard, d'une certaine limite d'épaisseur du feuillard et du profil d'interaction du faisceau laser L dans l'épaisseur de ce feuillard, ce profil d'interaction étant lui-même fonction notamment de la quantité d'énergie fournie lors de l'interaction, donc, en particulier, de la vitesse avec laquelle le vecteur V1 est réalisé, du profil du faisceau laser L, etc. En pratique, le vecteur V1 est défini avec un ensemble de paramètres, afin d'obtenir, à l'issue de la première étape de fusion, à la fois la portion fusionnée F1C1.1.F et la portion non fusionnée F1C1.1.NF de la partie F1C1.1 du feuillard F1C1, telles que définies plus haut, sans qu'il y ait déformation de la portion F1C1.1.NF.

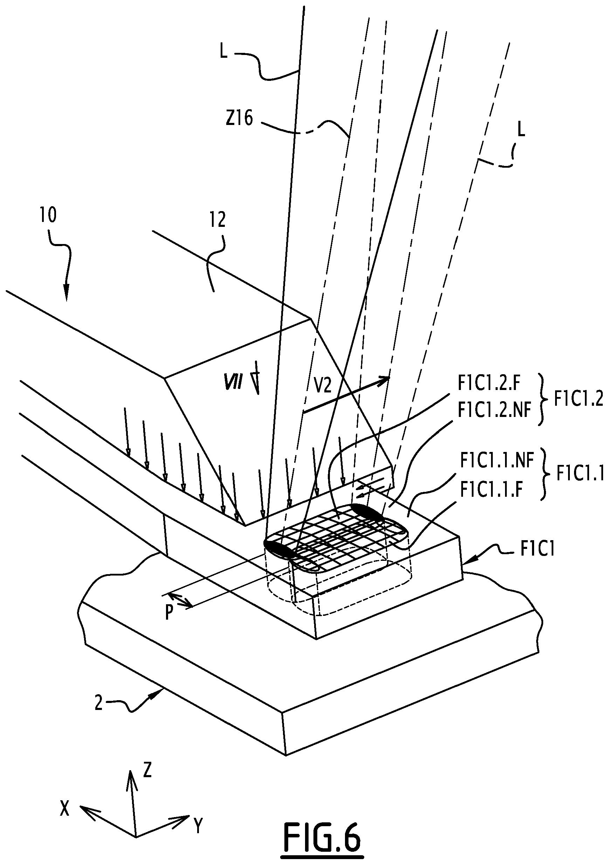

Comme représenté sur les figures 6 à 8, une deuxième étape de dépôt et une deuxième étape de fusion sont ensuite mises en oeuvre par répétition des premières étapes de dépôt et de fusion après avoir déplacé selon l'axe X, les uns vis-à-vis des autres, le feuillard F1C1 d'une part et le dispositif 10, en particulier sa buse 12 et le laser 16, d'autre part. En pratique, en tenant compte du fait que le feuillard F1C1 est soudé au support 2 par la portion fusionnée F1C1.1.F de sa partie F1C1.1, un mode de réalisation pratique consiste à déplacer, selon l'axe X, la buse 12 et le laser 16 par rapport au feuillard F1C1 qui reste immobile par rapport au support 2, moyennant l'actionnement des éléments de guidage et mécanismes d'entrainement, évoqués plus haut, ainsi que moyennant la synchronisation de ces derniers avec le déplacement du laser 16. Dans tous les cas, le déplacement relatif est réalisé d'un pas P.

Une fois ce déplacement relatif effectué, la mise en œuvre des deuxièmes étapes de dépôt et de fusion consiste à répéter la mise en oeuvre des premières étapes de dépôt et de fusion, non pas en appliquant ces étapes de dépôt et de fusion à la partie F1C1.1 du feuillard F1C1, mais en les appliquant à une deuxième partie F1C1.2 du feuillard, cette partie F1C1.2 étant décalée selon l'axe X de la partie F1C1.1 du pas P. Par la mise en oeuvre de la deuxième étape de dépôt, la partie F1C1.2 du feuillard F1C1 se trouve plaquée, selon l'axe Z, en contact contre le support 2, de la même façon qu'avait été plaquée la partie F1C1.1 contre le support 2 par la mise en oeuvre de la première étape de dépôt. De même, par la mise en oeuvre de la deuxième étape de fusion, seule une portion F1C1.2.F de la partie F1C1.2 est soudée par fusion au support 2, de la même façon que la portion fusionnée F1C1.1.F avait été soudée au support 2 par la mise en oeuvre de la première étape de fusion. En particulier, lors des deuxièmes étapes de fusion et de dépôt, la partie F1C1.2 du feuillard F1C1, en particulier ses bords opposés F1C1.2A et F1C1.2B disposés perpendiculairement à l'axe Y, occupent le même positionnement relatif vis-à-vis de la buse 12 et de l'axe Z16 du faisceau laser L qu'occupaient les bords F1C1.1A et F1C1.1 B de la partie F1C1.1 lors des premières étapes de dépôt et de fusion, de manière que la portion fusionnée F1C1.2F correspond, géométriquement, à la portion fusionnée F1C1.1.F mais décalée selon l'axe X du pas P, selon l'exemple présenté, à savoir selon la géométrie de la section de l'objet à fabriquer. L'exemple présenté est réduit à une section simple d'un objet à fabriquer de type prismatique, afin d'en faciliter la compréhension. Ainsi, la longueur de V1 est fonction de la position du feuillard F1C1 et notamment des bords F1C1.1 A et F1C1.1B. En particulier, on comprend que, plus généralement, les valeurs eA et eB ne sont pas nécessairement identiques.

De même, le reste de la partie F1C1.2 du feuillard F1C1 constitue une portion non fusionnée F1C1.2.NF qui, suivant des considérations similaires à celles développées plus haut pour la portion non fusionnée F1C1.1.NF de la partie F1C1.1, inclut les bords F1C1.2A et F1C1.2B de la partie F1C1.2 et est maintenue en contact plan contre le support 2, en particulier sans décollement selon l'axe Z.

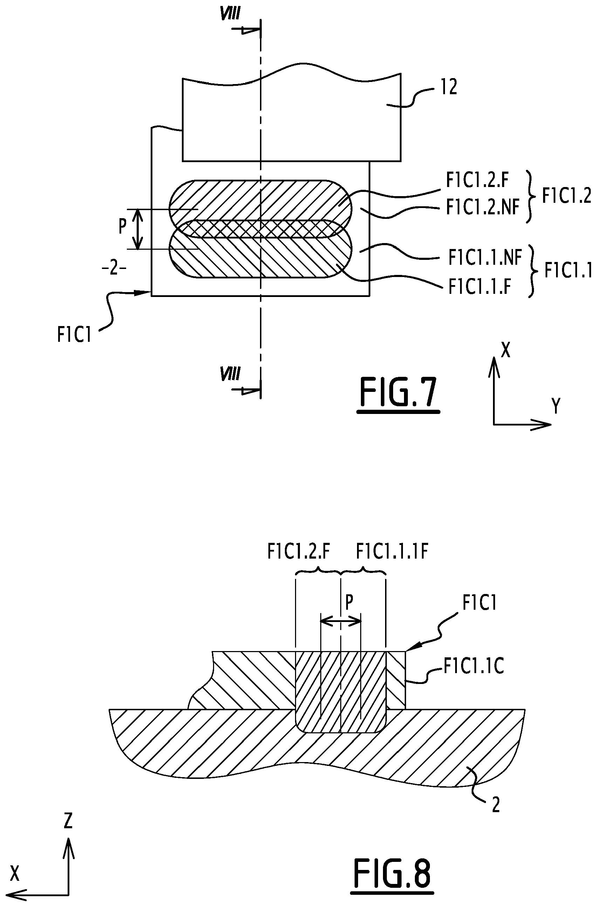

De plus, la valeur du pas P est telle que, comme bien visible sur les figures 6 à 8, les deux portions fusionnées F1C1.1.F et F1C1.2.F se chevauchent dans la direction de l'axe X, en se recouvrant partiellement sur une étendue, selon l'axe X, qui est fonction du pas P et de la dimension correspondante de ces portions fusionnées F1C1.1.F et F1C1.2.F. Comme bien visible sur les figures 7 et 8, ce recouvrement permet de constituer un volume de matière fusionnée qui est homogène et sans porosité, y compris vis-à-vis de la zone superficielle fusionnée du support 2. En d'autres termes, les parties F1C1.1 et F1C1.2 sont ainsi soudées, par fusion, de façon continue tant entre elles qu'entre le feuillard F1C1 et le support 2.

Suivant un aménagement optionnel visant à optimiser la deuxième étape de fusion, le déplacement de l'axe Z16 du faisceau laser L au cours de cette deuxième étape de fusion peut ne pas être réalisé selon le vecteur V1 décalé du pas P, mais selon un vecteur V2 qui est égal au vecteur V1 décalé du pas P mais qui est orienté en sens opposé, comme indiqué schématiquement sur la figure 6.

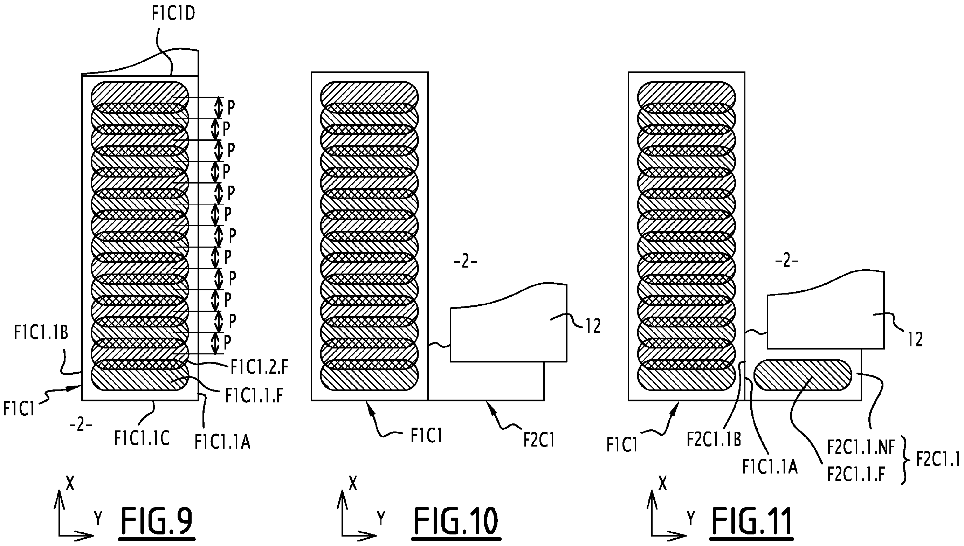

Une troisième étape de dépôt et une troisième étape de fusion sont ensuite répétées après avoir déplacé selon l'axe X, du pas P, le positionnement relatif entre le feuillard F1C1 et le dispositif 10, de manière que ces troisièmes étapes de dépôt et de fusion soient appliquées à une troisième partie du feuillard F1C1, décalée, selon l'axe X, du pas P vis-à-vis de la deuxième partie F1C1.2 du feuillard ; puis, une quatrième étape de dépôt et une quatrième étape de fusion sont répétées, également après avoir déplacé le feuillard et le dispositif l'un vis-à-vis de l'autre du pas P selon l'axe X ; et ainsi de suite. Plus globalement, des étapes de dépôt et de fusion sont ainsi répétées plusieurs fois, en appliquant, à chaque fois, l'étape de dépôt et l'étape de fusion à une partie longitudinale correspondante du feuillard F1C1, les parties du feuillard successivement concernées étant décalées les unes des autres selon l'axe X, à chaque fois du pas P. A titre d'exemple, la figure 9 montre le résultat de treize répétitions des étapes de dépôt et de fusion, avec l'obtention de quatorze portions fusionnées, dont les portions F1C1.1.F et F1C1.2.F, étant remarqué que pour chaque paire de portions se succédant dans l'axe X, les deux portions se chevauchent, comme pour les portions F1C1.1.F et F1C1.2.F.

Dans l'exemple de réalisation considéré ici, le procédé se poursuit par la mise en oeuvre d'une opération de découpe du feuillard F1C1, parallèlement à son bord F1C1.1C mais à l'opposé, selon l'axe X, de ce bord F1C1.C, en bordure de la portion fusionnée dernièrement réalisée, comme indiqué par le trait épaissi F1C1D à la figure 9.

En pratique, cette opération de découpe est avantageusement réalisée par ablation laser, en utilisant le laser 16.

Comme représenté sur les figures 10 à 13, le procédé se poursuit ensuite par la mise en oeuvre de nouvelles étapes de dépôt et de fusion et leur répétition, appliquée à un second feuillard F2C1. Les étapes de dépôt et les étapes de fusion, successivement mises en oeuvre pour ce feuillard F2C1 sont identiques à celles mises en oeuvre pour le feuillard F1C1, le positionnement du dispositif 10 étant adapté pour que son positionnement relatif par rapport au feuillard F2C1 soit identique à celui qu'il avait vis-à-vis du feuillard F1C1 lors des étapes de dépôt et de fusion relatives à ce feuillard F1C1. De plus, lors de la mise en oeuvre des étapes de dépôt et de fusion relative au feuillard F2C1, la buse 12, sous l'action de l'effort FY, plaque le feuillard F2C1 latéralement contre le feuillard F1C1 selon l'axe Y, le feuillard F1C1 étant fixe sur le support 2 de par la liaison rigide entre ses portions fusionnées et le support 2. De cette façon, une continuité métallurgique est réalisée par contact entre les feuillards F1C1 et F2C1, par jointement de leur bord latéral perpendiculaire à l'axe Y, en regard l'un de l'autre selon cet axe Y. Ainsi, dans l'exemple de réalisation considéré sur les figures 10 à 13, la première partie longitudinale terminale F2C1.1 du feuillard F2C1, dont une portion seulement, référencée F2C1.1.F, est soudée par fusion lors de la mise en oeuvre de la première étape de fusion relative au feuillard F2C1, est, pendant toute l'étape de dépôt appliquée à cette partie F2C1.1, appuyée latéralement par le bord F2C1.1B de sa portion non fusionnée F2C1.1.NF contre le bord F1C1.1 A de la partie F1C1.1 du feuillard F1C1.

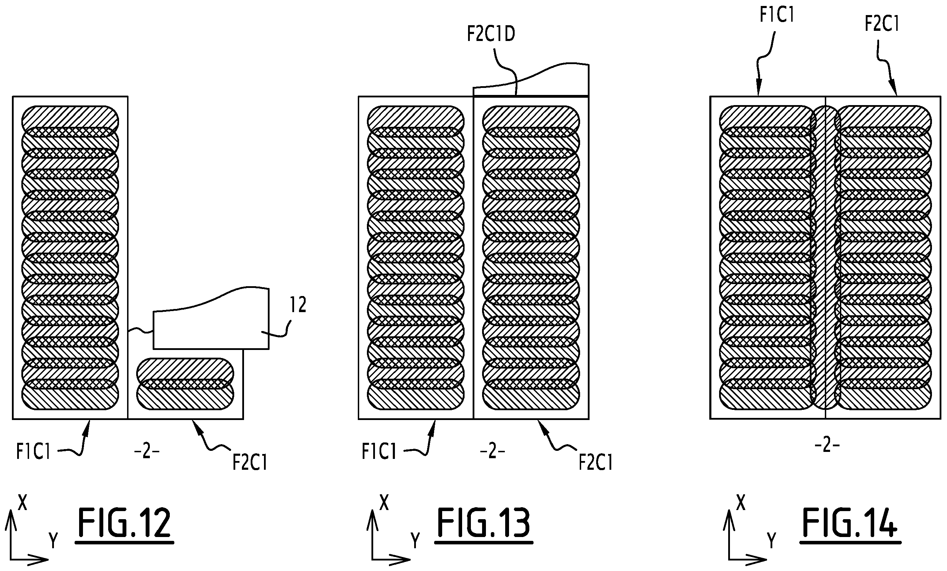

A l'issue de la dernière étape de dépôt et de la dernière étape de fusion, relatives au feuillard F2C1, ce dernier est découpé de la même façon que l'avait été le feuillard F1C1 à la figure 9, comme indiqué par le trait épaissi F2C1D à la figure 13.

Comme représenté sur la figure 14, le procédé se poursuit ensuite par la mise en œuvre d'une opération de soudure le long du jointement entre les feuillards F1C1 et F2C1. Avantageusement, à l'aide du faisceau laser L, les bords latéraux respectifs des feuillards F1C1 et F2C1, qui sont au contact l'un avec l'autre selon la direction Y, sont soudés par fusion, à la fois, au support 2 et l'un à l'autre en reliant leurs portions fusionnées respectives, comme montré sur la figure 14. A l'issue de cette opération de soudure, une continuité métallurgique est assurée entre les portions fusionnées respectives des feuillards F1C1 et F2C1, ainsi qu'avec le support 2. Toutes ces portions fusionnées forment conjointement une section bidimensionnelle de l'objet O à fabriquer, à savoir sa section bidimensionnelle au niveau de la couche C1, cette section étant ainsi obtenue dense et homogène à coeur.

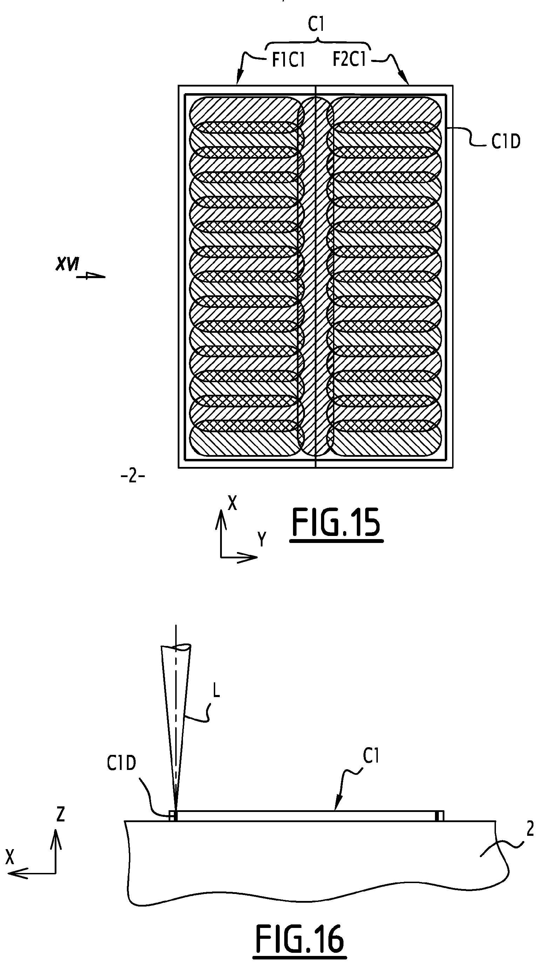

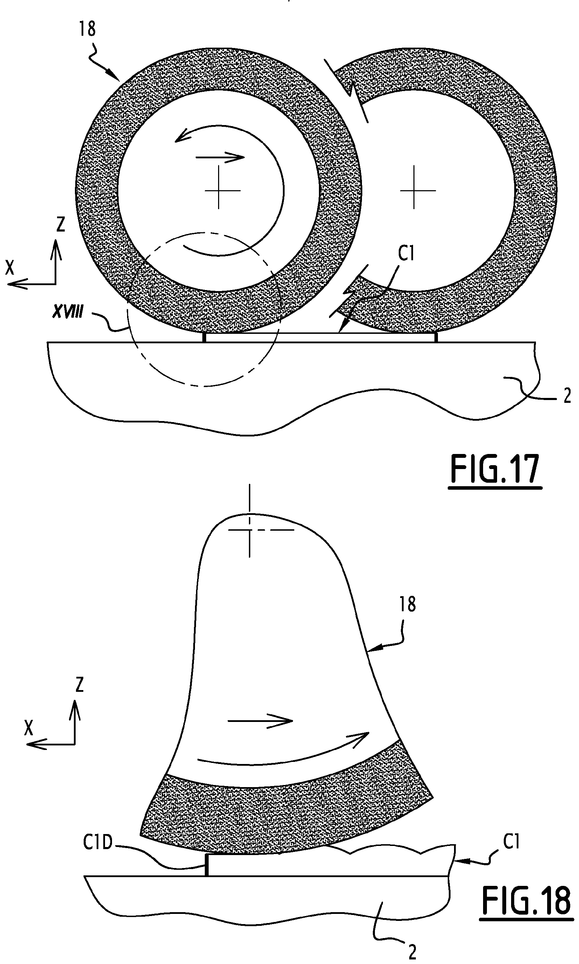

Avant de passer à la réalisation d'une nouvelle couche de l'objet O, à superposer à la couche C1, le procédé prévoit avantageusement la mise en oeuvre d'une étape de découpe, illustrée par les figures 15 et 16, et/ou la mise en oeuvre d'une étape de rectification, illustrée par les figures 17 et 18.

L'étape de découpe consiste à découper les feuillards F1C1 et F2C1 en bordure périphérique de leurs portions fusionnées, comme indiqué par le trait épaissi C1D aux figures 15 et 16. On comprend que les feuillards F1C1 et F2C1 sont ainsi découpés le long d'un contour de l'objet O, à savoir le contour de ce dernier au niveau de la couche C1. En pratique, cette étape de découpe est avantageusement réalisée par ablation laser, à l'aide du laser 16, en faisant parcourir à son faisceau L le contour précité.

L'étape de rectification consiste, quant à elle, à aplanir, par enlèvement de matière, la face des feuillards F1C1 et F2C1, orientée selon l'axe Z, à l'opposé du support 2. En pratique, comme illustré par les figures 17 et 18, cette étape de rectification utilise un outil de rectification ad hoc 18 appartenant à l'installation de fabrication 1, le cas échéant en déplaçant cet outil de rectification 18 sur la face précitée des feuillards F1C1 et F2C1 de la couche C1. Cet outil de rectification 18 est par exemple une meule ou encore un laser dont le faisceau rase la face précitée de la couche C1, pour en réaliser l'ablation superficielle. On comprend que la mise en œuvre de cette étape de rectification conduit à calibrer l'épaisseur de la couche C1, en supprimant localement au moins des surépaisseurs des portions fusionnées appartenant à cette couche.

On notera que, dans certains cas, l'étape de rectification n'est pas utile car son effet de calibration de l'épaisseur de la couche C1 sera négligeable. Dans d'autres cas, l'étape de rectification sera nécessaire du fait du profil des portions fusionnées, comme cela est montré de manière exagérée sur la figure 18. Dans d'autres cas encore, l'étape de rectification sera réalisée dès lors qu'on souhaite réduire de manière non négligeable l'épaisseur de matière déposée et fusionnée pour la couche C1 : à titre d'exemple, localement, la mise en oeuvre de cette étape de rectification peut ainsi être motivée par la présence de zones dites de contre dépouille, au niveau desquelles la qualité de la définition est directement liée à l'épaisseur de matière déposée par couche.

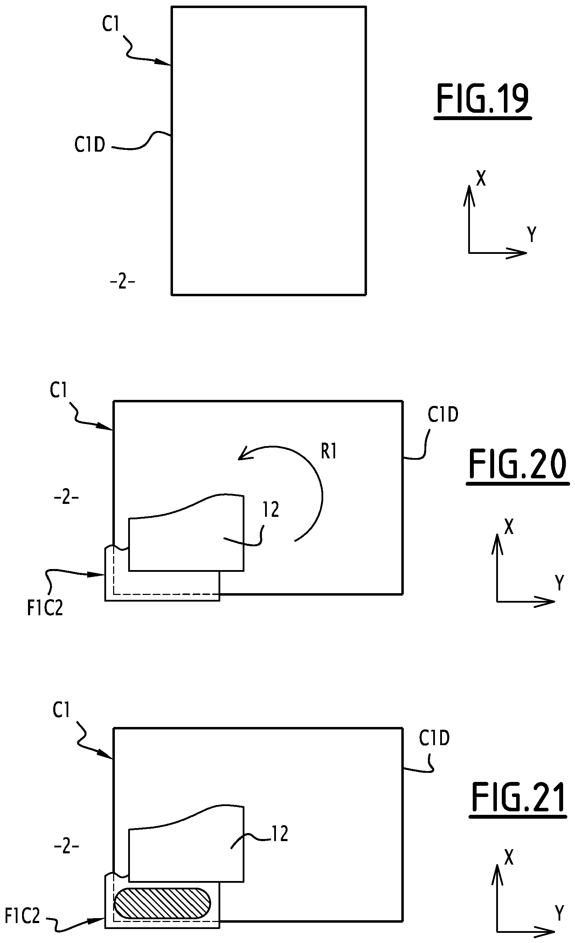

A l'issue des étapes de découpe et de rectification, la couche C1 de l'objet O à fabriquer est telle que représentée à la figure 19. Sur cette figure 19, ainsi que sur les figures suivantes, le contour de la couche C1 est volontairement épaissi, en étant référencé C1D. En tenant compte de ce qui précède, on comprend ainsi que le positionnement des feuillards F1C1 et F2C1, en particulier de la partie F1C1.1 du feuillard F1C1, a été déterminé, au tout début du procédé de fabrication, en tenant compte de la couche C1 à réaliser, en particulier de son contour C1D.

Sur les figures 20 à 28, le procédé de fabrication de l'objet O se poursuit, en réalisant, par l'intermédiaire de l'installation 1, une deuxième couche C2 de l'objet O, qui est superposée, selon l'axe Z, à la couche C1.

Pour des raisons qui apparaitront plus loin, avant que les opérations de réalisation de la couche C2 ne commencent, la couche C1 est pivotée autour de l'axe Z-Z, par exemple de 90° sur les figures, comme indiqué par la flèche R1 à la figure 20. L'orientation angulaire, autour de l'axe Z, de la couche C2 est ainsi modifiée par rapport à celle de la couche précédemment réalisée C1. En pratique, la valeur de l'angle de pivotement pour la couche précédemment réalisée n'est pas limitée à 90° comme dans l'exemple montré à la figure 20, mais peut être choisie librement, du moment que cette valeur soit différente de 0° et 180°.

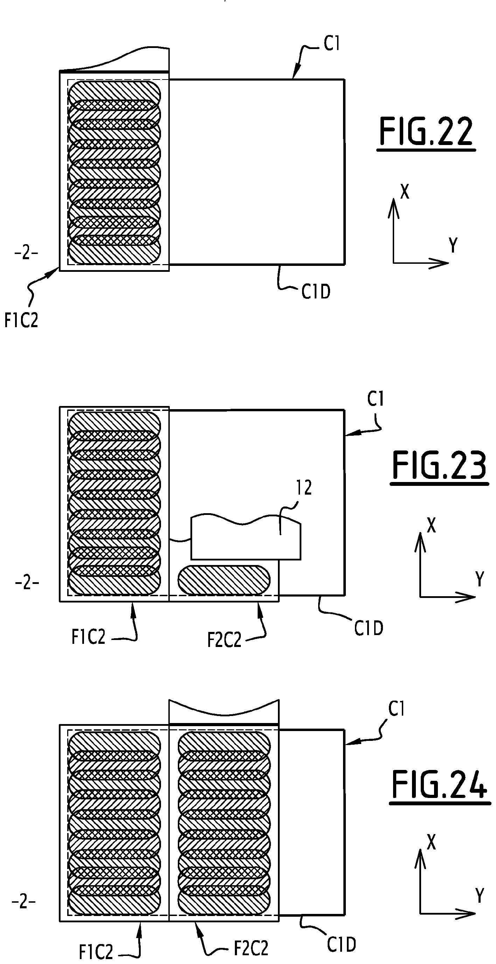

Sur les figures 20 à 22, on réalise, au moyen du dispositif 10, une partie de la couche C2 à partir d'un feuillard F1C2. Pour ce faire, on met en oeuvre et on répète l'étape de dépôt et l'étape de fusion, décrites précédemment pour le feuillard F1C1 de la couche C1, jusqu'à obtenir, dans l'exemple considéré sur les figures, neuf portions fusionnées au sein du feuillard F1C2, comme montré sur la figure 22. Du fait de la présence de la couche C1 sous la couche C2, le feuillard F1C2 est plaqué, selon l'axe Z, en contact contre la couche C1 par la mise en oeuvre des étapes de dépôt, et les portions fusionnées de ce feuillard F1C2 sont soudées à la couche C1 par la mise en oeuvre des étapes de fusion.

Sur les figures 23 et 24, on met de nouveau en oeuvre et on répète les étapes de dépôt et de fusion, en les appliquant à un autre feuillard F2C2 de la couche C2, comme ce qui avait été mis en oeuvre pour le feuillard F2C1 de la couche C1.

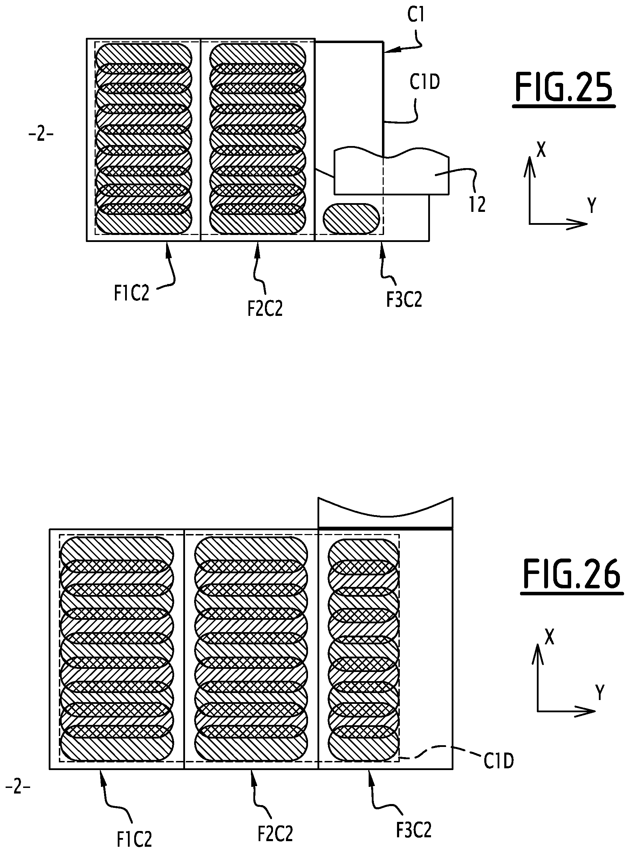

Et sur les figures 25 et 26, on met encore une fois en oeuvre et on répète les étapes de dépôt et de fusion en les appliquant à un troisième feuillard F3C2 qui, au sein de la couche C2, est juxtaposé latéralement au feuillard F2C2. On notera que pour l'exemple de réalisation, comme bien représenté sur les figures 25 et 26, les portions fusionnées du feuillard F3C2 ne s'étendent pas autant, selon l'axe Y, que les portions fusionnées des autres feuillards F1C2 et F2C2 : cela tient en fait que la section de l'objet O à fabriquer, au niveau de la couche C2, s'étend, selon l'axe Y, sur moins de trois fois la dimension correspondante des portions fusionnées des feuillards F1C2 et F2C2, de sorte qu'étendre davantage les portions fusionnées du feuillard F3C2 serait inutile pour la fabrication de l'objet O.

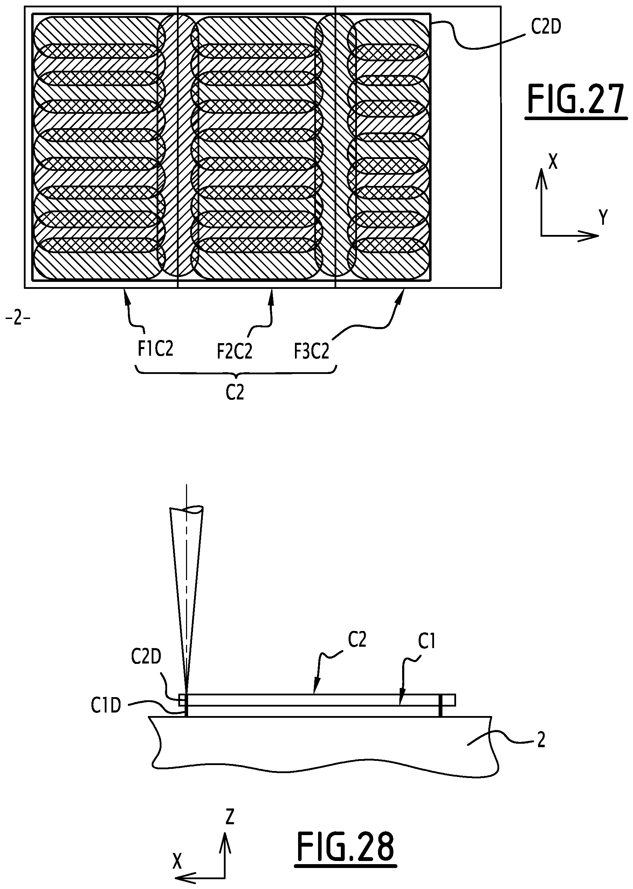

Après réalisation des portions fusionnées respectives des feuillards F1C2, F2C2 et F3C2, ces portions sont reliées entre elles et avec la couche C1 par soudure du ou des bords latéraux de ces feuillards, en contact les uns avec les autres, comme montré à la figure 27. On notera qu'en modifiant l'orientation angulaire, autour de l'axe Z, de la couche C2 par rapport à celle de la couche C1, on évite de superposer parallèlement les zones de jonction entre les bords latéraux des feuillards F1C1 et F2C1 de la couche C1 et les zones de jonction entre les bords latéraux des feuillards F1C2, F2C2 et F3C2 de la couche C2, ce qui favorise l'homogénéité de la structure métallique constituée par les couches C1 et C2.

Les figures 27 et 28 illustrent la mise en oeuvre d'une étape subséquente du procédé, similaire à l'étape de découpe évoquée précédemment en regard des figures 15 et 16 : au cours de cette nouvelle étape de découpe, les feuillards F1C2, F2C2 et F3C2 de la couche C2 sont découpés en bordure périphérique de leurs portions fusionnées respectives, le long d'un contour de l'objet O au niveau de la couche C2, comme indiqué par le trait épaissi C2D sur les figures 27 et 28.

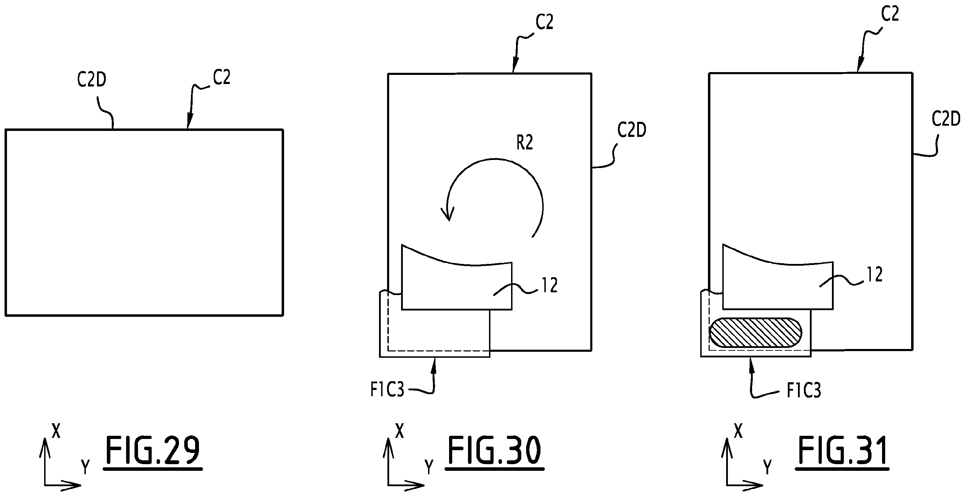

A l'issue de cette étape de découpe, ainsi que, le cas échéant, d'une étape de rectification de la couche C2, similaire à celle décrite précédemment en regard des figures 17 et 18 pour la couche C1, la couche C2 est telle qu'obtenue sur la figure 29, en particulier avec son contour C2D tracé de manière épaisse sur cette figure 29, ainsi que sur les figures suivantes.

Sur les figures 30 à 35, on réalise une troisième couche C3 de l'objet O par l'intermédiaire de l'installation 1. Cette couche C3, qui est superposée à la couche C2, est réalisée à partir de feuillards F1C3 et F2C3, exactement de la même façon que la couche C1, de sorte que les étapes et opérations correspondantes, notamment illustrées par les figures 30 à 35, ne seront pas décrites ici plus avant, le lecteur pouvant se référer aux explications données précédemment en regard des figures 1 à 19. Avantageusement, comme indiqué sur la figure 30, la réalisation de la couche C3 est précédée d'un pivotement de 90°, indiqué par la flèche R2, de la couche C2 et, par-là, de la couche C1 à laquelle la couche C2 est soudée, suivant des considérations similaires à celles précédemment développées en regard de la figure 20 en lien avec la flèche R1.

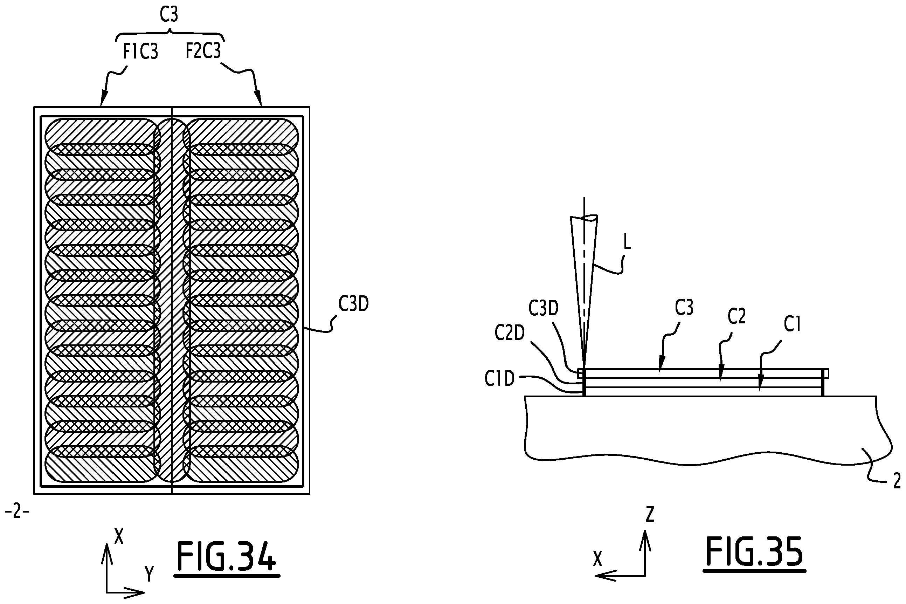

A l'issue des étapes et opérations de réalisation de la couche C3, cette dernière est telle que montrée sur les figures 34 et 35, en particulier avec son contour C3D dessiné par un trait épaissi. A ce stade, l'objet O est constitué des couches superposées C1, C2 et C3 soudées les unes aux autres.

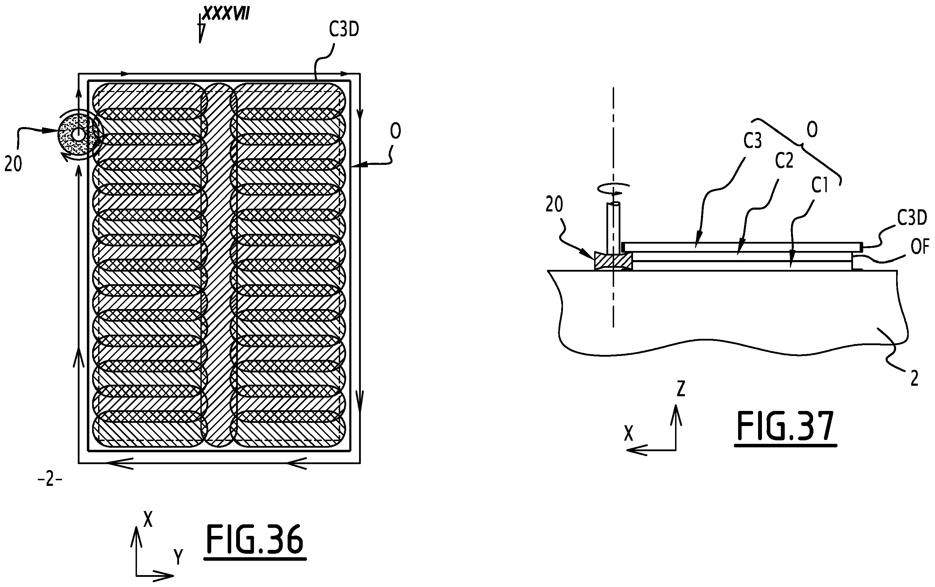

Une disposition optionnelle du procédé de fabrication peut alors être mise en oeuvre sur l'objet O, comme illustré par les figures 36 et 37. Cette disposition consiste à usiner, transversalement à l'axe Z, la bordure périphérique d'au moins certaines des couches de l'objet O réalisées jusqu'ici, par exemple la bordure périphérique des couches C1 et C2 dans l'exemple illustré aux figures 36 et 37. L'objectif de cet usinage est de réaliser une finition de tout ou partie des contours C1D et C2D des couches C1 et C2, en obtenant, à l'issue de cet usinage, un contour fini OF de l'objet O au niveau de ces couches C1 et C2. Avantageusement, cette opération d'usinage est réalisée par micro usinage. En pratique, les outils utilisés pour réaliser cette opération sont, par exemple, une électrobroche, dotée d'outils coupants ou abrasifs, ou encore un laser dont le faisceau est configuré pour réaliser une ablation, telle qu'une micro découpe par exemple. Dans tous les cas, cette opération d'usinage est ciblée et permet de satisfaire à des exigences de qualité de surface et de précision dimensionnelle pour l'objet O : à titre d'exemple non limitatif, le contour fini OF obtenu présente une rugosité Ra de l'ordre de 1,6 µm, voire 0,8 µm, et une précision dimensionnelle de l'ordre de +- 0,01 mm. Bien entendu, cette opération d'usinage est réalisée selon les besoins, en fonction de l'objet O à fabriquer, ce qui signifie que cette opération n'est pas nécessaire sur l'ensemble de l'objet O ; en d'autres termes, le contour final de l'objet O peut correspondre, en certaines zones et pour certaines couches, au contour fini OF obtenu à l'issue de l'opération d'usinage, le reste du contour final correspondant au contour, dit brut, des couches, obtenus à l'issue des étapes de découpe mises en œuvre lors de la réalisation successive des couches.

Par ailleurs, divers aménagements et variantes au procédé et/ou à l'installation 1, décrits jusqu'ici, sont envisageables.

Ainsi, selon un mode de réalisation complémentaire voire alternatif, les soudures par fusion, décrites jusqu'ici comme étant réalisées par application du faisceau L du laser 16, peuvent être réalisées, tout ou partie, par soudure par résistance à l'aide d'électrodes. Sans entrer ici dans le détail des opérations de soudure par résistance, qui sont connues en soi, l'utilisation d'électrodes de soudage par résistance permet d'appliquer de façon combinée les efforts FZ et FY, respectivement selon les axes Z et Y, directement par l'action de cette électrode de soudure par résistance plutôt que par la buse 12. De plus, l'effort FY appliqué par une telle électrode de soudure par résistance permet avantageusement de réaliser en outre les soudures entre les bords latéraux respectifs des feuillards en contact l'un avec l'autre, simultanément à la mise en oeuvre des opérations de fusion aboutissant aux soudures des portions fusionnées décrites plus haut. Par ailleurs, dans le cas où l'installation 1 correspondante est dépourvue de tout laser, les opérations de découpe individuelle des feuillards, telles que montrées aux figures 9, 13, 22, 24, 26 et 33 sont réalisées par action simultanée d'une électrode dite de découpe et du système 14, ce dernier étant alors prévu pour agir en appliquant une action mécanique de traction sur le feuillard dirigée en sens opposé à la flèche F14 dessinée à la figure 1, afin de couper le feuillard. Quant aux étapes de découpe illustrées par les figures 15 et 16, 27 et 28, et 34 et 35, elles sont réalisées directement avec un outil d'usinage coupant ou abrasif, selon le principe décrit en regard des figures 36 et 37, mais appliquées uniquement à la dernière couche réalisée.

L'objet du mode de réalisation complémentaire voire alternatif qui vient d'être décrit est d'abaisser le coût de l'installation 1, en permettant de mettre en oeuvre le procédé conforme à l'invention sans inclure dans cette installation un laser, tel que le laser 16, dont l'investissement financier est élevé.

Selon un autre aspect de variante du procédé de fabrication, chacun des feuillards utilisés ou au moins certains d'entre eux peuvent avoir une composition métallurgiques et/ou une épaisseur et/ou une largeur distincte de celle des autres, dans les limites des compatibilités physico-chimiques acceptables pour l'objet O à fabriquer. Selon ce principe, l'installation de fabrication 1 est alors avantageusement équipée de plusieurs dispositifs 10 permettant de distribuer respectivement des feuillards dont les nuances métallurgiques, les épaisseurs et les largeurs sont différentes les unes des autres.

Selon encore un autre aspect de variante du procédé de fabrication, l'enchaînement des étapes de dépôt et de fusion relatives à un premier feuillard et relatives à un second feuillard juxtaposé au premier feuillard précité au sein d'une même couche de l'objet à fabriquer, peut être différent de celui décrit en regard des figures. En particulier, sous réserve d'aménagements ad hoc de l'installation de fabrication 1, au moins certaines des étapes de dépôt et de fusion relatives au second feuillard peuvent être mises en oeuvre simultanément à au moins certaines des étapes de dépôt et de fusion relatives au premier feuillard, du moment que chaque étape de dépôt relative au second feuillard soit mise en oeuvre alors que le premier feuillard est, par tout moyen approprié, fixe par rapport à la couche précédemment déposée ou, à défaut de cette dernière, au support 2.

## Revendications

1. Procédé de fabrication d'un objet tridimensionnel (O),
dans lequel des couches planes (C1, C2, C3) sont réalisées les unes après les autres de façon que chaque couche nouvellement réalisée est superposée, selon un premier axe (Z) qui est perpendiculaire aux plans respectifs des couches, à une couche précédemment réalisée ou, à défaut de cette dernière, à un support métallique plan (2) qui est perpendiculaire au premier axe, chacune de ces couches étant constituée d'au moins un feuillard métallique (F1C1, F2C1, F1C2, F2C2, F3C2, F1C3, F2C3) de manière que le ou chaque feuillard de chaque couche occupe toute l'épaisseur, selon le premier axe (Z), de la couche correspondante,
**caractérisé en ce que** le procédé prévoit, pour réaliser chaque couche (C1, C2, C3), de :
- mettre en oeuvre une étape de dépôt, pendant toute la durée de laquelle une partie (F1C1.1) du ou de chaque feuillard (F1C1, F2C1, F1C2, F2C2, F3C2, F1C3, F2C3) de la couche à réaliser est plaquée, selon le premier axe (Z), en contact contre la couche précédemment réalisée ou, à défaut de cette dernière, contre le support (2) ;
- mettre en oeuvre une étape de fusion, qui est réalisée au cours de l'étape de dépôt et au cours de laquelle seulement une portion (F1C1.1.F), dite fusionnée, de ladite partie du ou de chaque feuillard est soudée par fusion à la couche précédemment réalisée ou, à défaut de cette dernière, au support, de manière que, à l'issue de cette étape de fusion, le reste (F1C1.1.NF) de ladite partie, qui n'a pas été fusionné, inclut les bords (F1C1.1A, F1C1.1B, F1C1.1C) de ladite partie, disposés transversalement au plan de la couche à réaliser, et est toujours au contact de la couche précédemment réalisée ou, à défaut de cette dernière, du support ; et
- répéter plusieurs fois les étapes de dépôt et de fusion en les appliquant à autant de parties correspondantes (F1C1.2) du ou de chaque feuillard, qui sont décalées les unes des autres dans un deuxième axe (X) perpendiculaire au premier axe (Z), de manière que les portions fusionnées (F1C1.1.F, F1C1.2.F) de deux desdites parties se succédant dans le deuxième axe se chevauchent, de sorte que toutes les portions fusionnées qui sont obtenues après avoir répété les étapes de dépôt et de fusion relatives au ou aux feuillards forment conjointement une section bidimensionnelle de l'objet à fabriquer (O).

2. Procédé suivant la revendication 1, dans lequel, lorsque la couche à réaliser (C1, C2, C3) est constituée de plusieurs feuillards (F1C1, F2C1, F1C2, F2C2, F3C2, F1C3, F2C3), chaque étape de dépôt relative à un second (F2C1) des feuillards :
- est mise en oeuvre alors qu'un premier (F1C1) des feuillards est fixe par rapport à la couche précédemment réalisée ou, à défaut de cette dernière, au support (2), et
- prévoit, pendant toute sa durée, de mettre des bords latéraux respectifs des premier et second feuillards en contact l'un avec l'autre selon un troisième axe (Y) qui est perpendiculaire à la fois au premier axe (Z) et au deuxième axe (X),
et, à l'issue ou lors des étapes de fusion relatives au second feuillard, les bords latéraux respectifs des premier et second feuillards sont soudés par fusion, à la fois, à la couche précédemment réalisée ou, à défaut de cette dernière, au support, et l'un à l'autre en reliant les portions fusionnées correspondantes des premier et second feuillards.

3. Procédé suivant la revendication 2, dans lequel les étapes de dépôt relatives au second feuillard (F2C1) sont mises en oeuvre à l'issue d'au moins certaines voire de toutes les étapes de dépôt et de fusion relatives au premier feuillard (F1C1).

4. Procédé suivant l'une quelconque des revendications précédentes, dans lequel au moins deux feuillards d'une même couche ou bien de deux couches superposées ont des compositions chimiques respectives qui sont différentes l'une de l'autre.

5. Procédé suivant l'une quelconque des revendications précédentes, dans lequel au moins deux feuillards d'une même couche ou bien de deux couches superposées ont des épaisseurs qui sont différentes l'une de l'autre et/ou ont des largeurs qui sont différentes l'une de l'autre.

6. Procédé suivant l'une quelconque des revendications précédentes, lequel procédé prévoit en outre, pour réaliser au moins l'une des couches (C1, C2, C3), de mettre en oeuvre une étape de découpe, qui est mise en œuvre après avoir répété les étapes de dépôt et de fusion relatives à la couche concernée, et au cours de laquelle le ou les feuillards de la couche concernée sont découpés en bordure périphérique de leurs portions fusionnées, le long d'un contour correspondant (C1D, C2D, C3D) de l'objet (O).

7. Procédé suivant l'une quelconque des revendications précédentes, **caractérisé en ce que** lequel procédé prévoit en outre, pour réaliser au moins l'une des couches (C1, C2, C3), de mettre en oeuvre une étape de rectification, qui est mise en oeuvre après avoir répété les étapes de dépôt et de fusion relatives à la couche concernée, et au cours de laquelle la face du ou des feuillards de la couche concernée, qui est tournée, selon l'axe (Z), à l'opposé de la couche précédemment réalisée ou, à défaut de cette dernière, à l'opposé du support (2), est aplanie par enlèvement de matière.

8. Procédé suivant l'une quelconque des revendications précédentes, dans lequel, après avoir réalisé chaque couche (C1, C2, C3) et avant de réaliser la couche suivante, l'orientation angulaire, autour du premier axe (Z), de la couche à réaliser est modifiée par rapport à celle de la couche précédemment réalisée.

9. Procédé suivant l'une quelconque des revendications précédentes, dans lequel, après avoir réalisé au moins plusieurs des couches (C1, C2, C3), la bordure périphérique d'au moins certaines des couches réalisées est usinée transversalement au premier axe (Z), notamment par micro usinage.

10. Procédé suivant l'une quelconque des revendications précédentes, dans lequel un faisceau (L) d'un laser (16) est appliqué sur le ou les feuillards de chaque couche à réaliser (C1, C2, C3) pour mettre en oeuvre au moins certaines voire toutes les étapes de fusion, ainsi que, le cas échéant, au moins certaines voire toutes lesdites étape de découpe et/ou lesdites étapes de rectification et/ou les opérations de soudure des bords latéraux respectifs desdits premier et second feuillards.

11. Procédé suivant l'une quelconque des revendications précédentes, dans lequel au moins une électrode de soudure par résistance est appliquée sur le ou les feuillards de chaque couche à réaliser (C1, C2, C3) pour mettre en oeuvre au moins certaines voire toutes les étapes de fusion, ainsi que, le cas échéant, au moins certaines voire toutes les opérations de soudure des bords latéraux respectifs desdits premier et second feuillards.

12. Installation (1) de fabrication d'un objet tridimensionnel,
comportant un dispositif (10) adapté pour réaliser les unes après les autres des couches planes (C1, C2, C3) de façon que chaque couche nouvellement réalisée par le dispositif est superposée, selon un premier axe (Z) qui est perpendiculaire aux plans respectifs des couches, à une couche précédemment réalisée ou, à défaut de cette dernière, un support métallique plan (2) qui est perpendiculaire au premier axe (Z), chacune des couches réalisées par le dispositif (10) étant constituée d'au moins un feuillard métallique (F1C1, F2C1, F1C2, F2C2, F3C2, F1C3, F2C3) de manière que le ou chaque feuillard de chaque couche occupe toute l'épaisseur, selon l'axe (Z), de la couche correspondante, **caractérisée** en ce le dispositif (10) comprend :
- des moyens de dépôt (12) qui sont adaptés pour plaquer, selon l'axe (Z), une partie du feuillard d'une couche à réaliser en contact contre la couche précédemment réalisée ou, à défaut de cette dernière, contre le support (2) ;
- des moyens de fusion (16) qui sont adaptés pour souder par fusion, à la couche précédemment réalisée ou, à défaut de cette dernière, au support, seulement une portion, dite fusionnée, de la partie, plaquée par les moyens de dépôt, du feuillard d'une couche à réaliser de manière que, après application des moyens de fusion, le reste de ladite partie, qui n'a pas été fusionné, inclut les bords de ladite partie, disposés transversalement au plan de la couche à réaliser, et est toujours au contact de la couche précédemment réalisée ou, à défaut de cette dernière, du support ; et
- des moyens de déplacement qui sont adaptés pour déplacer, dans un deuxième axe (X) qui est perpendiculaire au premier axe (Z), les uns vis-à-vis des autres le feuillard d'une couche à réaliser d'une part et les moyens de dépôt et les moyens de fusion d'autre part, de manière à permettre d'appliquer les moyens de dépôt et les moyens de fusion à plusieurs parties correspondantes du feuillard qui sont décalées les unes des autres dans le deuxième axe (X).

13. Installation suivant la revendication 12, dans laquelle les moyens de fusion comprennent un laser (16).

14. Installation suivant l'une des revendications 12 ou 13, dans laquelle les moyens de fusion comprennent au moins une électrode de soudure par résistance.

## Patentansprüche

1. Verfahren zur Herstellung eines dreidimensionalen Gegenstandes (O), bei dem ebene Schichten (C1, C2, C3) nacheinander hergestellt werden, derart dass jede neu hergestellte Schicht gemäß einer ersten Achse (Z), die senkrecht zu den jeweiligen Ebenen der Schichten ist, einer vorher hergestellten Schicht oder, falls diese letztere nicht vorhanden ist, einem ebenen metallischen Träger (2), der senkrecht zu ersten Achse ist, überlagert wird, wobei jede dieser Schichten aus mindestens einem Metallband (F1C1, F2C1, F1C2, F2C2, F3C2, F1C3, F2C3) gebildet wird, derart dass das oder jedes Band jeder Schicht die gesamte Dicke der entsprechenden Schicht gemäß der ersten Achse (Z) einnimmt, **dadurch gekennzeichnet, dass** das Verfahren für die Herstellung jeder Schicht (C1, C2, C3) vorsieht:
- einen Schritt des Ablegens durchzuführen, wobei während der gesamten Dauer desselben ein Teil (F1C1.1) des oder jedes Bandes (F1C1, F2C1, F1C2, F2C2, F3C2, F1C3, F2C3) der herzustellenden Schicht gemäß der ersten Achse (Z) in Kontakt gegen die vorher hergestellte Schicht oder, falls diese letztere nicht vorhanden ist, gegen den Träger (2) gepresst wird;
- einen Schritt des Schmelzens durchzuführen, der während des Schrittes des Ablegens realisiert wird und während dem nur ein Abschnitt (F1C1.1.F), genannt geschmolzener Abschnitt, des Teils des oder jedes Bandes an die vorher hergestellte Schicht oder, falls diese letztere nicht vorhanden ist, an den Träger schmelzgeschweißt wird, so dass am Ende dieses Schrittes des Schmelzens der Rest (F1C1.1.NF) des Teils, der nicht geschmolzen wurde, die Ränder (F1C1.1A, F1C1.1B, F1C1.1C) des Teils, die quer zur Ebene der herzustellenden Schicht angeordnet sind, einschließt und immer in Kontakt mit der zuvor hergestellten Schicht oder, falls diese letztere nicht vorhanden ist, dem Träger ist; und
- mehrere Male die Schritte des Ablegens und Schmelzens zu wiederholen, indem sie auf so viele entsprechenden Teile (F1C1.2) des oder jedes Bandes, die zueinander in einer zweiten Achse (X) senkrecht zur ersten Achse (Z) versetzt sind, angewandt werden, so dass die verschmolzenen Abschnitte (F1C1.1.F, F1C1.2.F) von zwei in der zweiten Achse aufeinanderfolgenden Teile sich überlappen, derart dass alle geschmolzenen Abschnitte, die erhalten werden, nachdem die Schritte des Ablegens und Schmelzens bezüglich des oder der Bänder wiederholt wurden, zusammen einen zweidimensionalen Schnitt des herzustellenden Gegenstandes (O) bilden.

2. Verfahren nach Anspruch 1, bei dem, wenn die herzustellende Schicht (C1, C2, C3) aus mehreren Bändern (F1C1, F2C1, F1C2, F2C2, F3C2, F1C3, F2C3) gebildet wird, jeder Schritt des Ablegens relativ zu einem zweiten (F2C1) der Bänder:
- durchgeführt wird, während ein erstes (F1C1) der Bänder in Bezug auf die zuvor hergestellte Schicht oder, falls diese letztere nicht vorhanden ist, den Träger fest ist und
- während seiner gesamten Dauer vorsieht, die jeweiligen Seitenränder des ersten und zweiten Bandes miteinander gemäß einer dritten Achse (Y) in Kontakt zu bringen, die senkrecht sowohl zur ersten Achse (Z) als auch zur zweiten Achse (X) ist,
und am Ende oder während der Schritte des Schmelzens relativ zum zweiten Band, die jeweiligen Seitenränder des ersten und zweiten Bandes sowohl an die zuvor hergestellte Schicht oder, falls diese letztere nicht vorhanden ist, an den Träger als auch miteinander schmelzgeschweißt werden, indem die entsprechenden geschmolzenen Abschnitte des ersten und zweiten Bandes verbunden werden.

3. Verfahren nach Anspruch 2, bei dem die Schritte des Ablegens in Bezug auf das zweite Band (F2C1) am Ende von mindestens einigen der, sogar aller Schritte des Ablegens und Schmelzens in Bezug auf das erste Band (F1C1) durchgeführt werden.

4. Verfahren nach einem beliebigen der vorhergehenden Ansprüche, bei dem mindestens zwei Bänder einer selben Schicht oder auch von zwei übereinanderliegenden Schichten jeweilige chemische Zusammensetzungen aufweisen, die unterschiedlich zueinander sind.

5. Verfahren nach einem beliebigen der vorhergehenden Ansprüche, bei dem mindestens zwei Bänder einer selben Schicht oder auch von zwei übereinanderliegenden Schichten Dicken aufweisen, die unterschiedlich zueinander sind und/oder Breiten aufweisen, die unterschiedlich zueinander sind.

6. Verfahren nach einem beliebigen der vorhergehenden Ansprüche, wobei das Verfahren außerdem zur Herstellung mindestens einer der Schichten (C1, C2, C3) vorsieht, einen Schritt des Schneidens durchzuführen, der durchgeführt wird, nachdem die Schritte des Ablegens und Schmelzens bezüglich der betrachteten Schicht wiederholt wurden, und während dem das oder die Bänder der betrachteten Schicht an Umfangsrändern ihrer verschmolzenen Abschnitte entlang einer dem Gegenstand (O) entsprechenden Kontur (C1D, C2D, C3D) geschnitten werden.

7. Verfahren nach einem beliebigen der vorhergehenden Ansprüche, **dadurch gekennzeichnet, dass** das Verfahren außerdem zur Herstellung mindestens einer der Schichten (C1, C2, C3) vorsieht, einen Schritt des Nachbesserns durchzuführen, der durchgeführt wird, nachdem die Schritte des Ablegens und Schmelzens bezüglich der betrachteten Schicht wiederholt wurden und während dem die Seite des oder der Bänder der betrachteten Schicht, die gemäß der Achse (Z) entgegengesetzt zur zuvor hergestellten Schicht oder, falls diese letztere nicht vorhanden ist, entgegengesetzt zum Träger (2) gerichtet ist, durch Materialabtragung geglättet wird.

8. Verfahren nach einem der vorhergehenden Ansprüche, bei dem, nachdem jede Schicht (C1, C2, C3) hergestellt wurde und bevor die darauffolgende Schicht hergestellt wird, die Winkelausrichtung um die erste Achse (Z) der herzustellenden Schicht in Bezug auf die der zuvor hergestellten Schicht modifiziert wird.

9. Verfahren nach einem beliebigen der vorhergehenden Ansprüche, bei dem, nachdem mindestens mehrere der Schichten (C1, C2, C3) hergestellt wurden, der Umfangsrand mindestens einiger der hergestellten Schichten quer zur ersten Achse (Z) bearbeitet wird, insbesondere durch Mikrobearbeitung.

10. Verfahren nach einem beliebigen der vorhergehenden Ansprüche, bei dem ein Laserbündel (16, L) auf das oder die Bänder jeder herzustellenden Schicht (C1, C2, C3) aufgebracht wird, um mindestens einige, sogar alle Schritte des Schmelzens durchzuführen sowie gegebenenfalls mindestens einige, sogar alle Schritte des Schneidens und/oder die Schritte des Nachbesserns und/oder die Schweißoperationen der jeweiligen Seitenränder des ersten und zweiten Bandes durchzuführen.

11. Verfahren nach einem beliebigen der vorhergehenden Ansprüche, bei dem mindestens eine Widerstandsschweißelektrode auf das oder die Bänder jeder herzustellenden Schicht (C1, C2, C3) aufgebracht wird, um mindestens einige, sogar alle Schritte des Schmelzens, sowie gegebenenfalls mindestens einige, sogar alle Schweißoperationen der jeweiligen Seitenränder des ersten und zweiten Bandes durchzuführen.

12. Anlage (1) zur Herstellung eines dreidimensionalen Gegenstandes,
eine Vorrichtung (10) aufweisend, die ausgebildet ist, ebene Schichten (C1, C2, C3) nacheinander herzustellen, derart dass jede von der Vorrichtung neu hergestellte Schicht gemäß einer ersten Achse (Z), die senkrecht zu den jeweiligen Ebenen der Schichten ist, einer vorher hergestellten Schicht oder, falls diese letztere nicht vorhanden ist, einem ebenen metallischen Träger (2), der senkrecht zu ersten Achse ist, überlagert wird, wobei jede dieser Schichten aus mindestens einem Metallband (F1C1, F2C1, F1C2, F2C2, F3C2, F1C3, F2C3) gebildet wird, derart dass das oder jedes Band jeder Schicht die gesamte Dicke gemäß der ersten Achse (Z) der entsprechenden Schicht einnimmt, **dadurch gekennzeichnet, dass** die Vorrichtung (10) umfasst
- Mittel (12) zum Ablegen, die ausgebildet sind, einen Teil des Bandes einer herzustellenden Schicht gemäß der Achse (Z) in Kontakt gegen die vorher hergestellte Schicht oder, falls diese letztere nicht vorhanden ist, gegen den Träger (2) zu pressen;
- Mittel (16) zum Schmelzen, die ausgebildet sind, nur einen von den Mitteln zum Ablegen gepressten Abschnitt, genannt geschmolzener Abschnitt, des Teils des Bandes einer herzustellenden Schicht mit der vorher hergestellten Schicht oder, falls diese letztere nicht vorhanden ist, mit dem Träger durch Schmelzen zu verschweißen, so dass nach Anwendung der Mittel zum Schmelzen der Rest des Teils, der nicht geschmolzen wurde, die Ränder des Teils, die quer zur Ebene der herzustellenden Schicht angeordnet sind, einschließt und immer in Kontakt mit der zuvor hergestellten Schicht oder, falls diese letztere nicht vorhanden ist, dem Träger ist; und
- Bewegungsmittel, die angepasst sind, in einer zweiten Achse (X), die senkrecht zu ersten Achse (Z) ist, das Band einer herzustellenden Schicht einerseits und die Mittel zum Ablegen und die Mittel zum Schmelzen andererseits zueinander zu bewegen, so dass die Mittel zum Ablegen und die Mittel zum Schmelzen an mehreren entsprechenden Teilen des Bandes, die zueinander in der zweiten Achse (X) versetzt sind, aufgebracht werden können.

13. Anlage nach Anspruch 12, bei dem die Mittel zum Schmelzen einen Laser (16) umfassen.

14. Anlage nach Anspruch 12 oder 13, bei dem die Mittel zum Schmelzen mindestens eine Widerstandsschweißelektrode umfassen.

## Claims

1. A method for manufacturing a three-dimensional object (O),
wherein planar layers (C1, C2, C3) are produced one after another such that each newly produced layer is superimposed, along a first axis (Z) that is perpendicular to the respective planes of the layers, on a layer previously produced or, if the latter is not present, on a planar metal support (2) that is perpendicular to the first axis, each of these layers being made up of at least one metal strip (F1C1, F2C1, F1C2, F2C2, F3C2, F1C3, F2C3) such that the or each strip of each layer occupies the entire thickness, along the first axis (Z), of the corresponding layer,
**characterized in that** the method provides, to produce each layer (C1, C2, C3):
- carrying out a deposition step, during the entire duration of which a part (F1C1.1) of the or each strip (F1C1, F2C1, F1C2, F2C2, F3C2, F1C3, F2C3) of the layer to be produced is pressed, along the first axis (Z), in contact against the layer previously produced or, if the latter is not present, against the support (2);
- carrying out a fusion step, which is done during the deposition step and during which only a portion (F1C1.1.F), called fused, of said part of the or each strip is welded by fusion to the layer previously produced or, if the latter is not present, the support, such that, at the end of this fusion step, the rest (F1C1.1.NF) of said part, which has not been fused, includes the edges (F1C1.1A, F1C1.1B, F1C1.1C) of said part, arranged transversely to the plane of the layer to be produced, and is still in contact with the layer previously produced or, if the latter is not present, the support; and
- repeating said deposition and fusion steps several times by applying them to as many corresponding parts (F1C1.2) of the or each strip, which are offset from one another in a second axis (X) perpendicular to the first axis (Z), such that the fused portions (F1C1.1.F, F1C1.2.F) of two of said parts following one another in the second axis overlap, so that all of the fused portions that are obtained after having repeated the deposition and fusion steps relative to the strip(s) jointly form a two-dimensional section of the object to be manufactured (O).

2. The method according to claim 1, wherein, when the layer to be produced (C1, C2, C3) is made up of several strips (F1C1, F2C1, F1C2, F2C2, F3C2, F1C3, F2C3), each deposition step relative to a second (F2C1) of the strips:
- is carried out while a first (F1C1) of the strips is stationary relative to the layer previously produced or, if the latter is not present, to the support (2), and
- provides, throughout its entire duration, for placing the respective lateral edges of the first and second strips in contact with one another along a third axis (Y) that is perpendicular to both the first axis (Z) and the second axis (X),
and, at the end of or during the fusion steps relative to the second strip, the respective lateral edges of the first and second strips are welded by fusion both to the layer previously produced or, if the latter is not present, to the support, and to one another by connecting the corresponding fused portions of the first and second strips.

3. The method according to claim 2, wherein the deposition steps relative to the second strip (F2C1) are carried out at the end of at least some, or even all of the deposition and fusion steps relative to the first strip (F1C1).

4. The method according to any one of the preceding claims, wherein at least two strips of a same layer or two superimposed strips have different respective chemical compositions from one another.

5. The method according to any one of the preceding claims, wherein at least two strips of a same layer or two superimposed strips have different thicknesses from one another and/or different widths from one another.

6. The method according to any one of the preceding claims, wherein the method further provides, to produce at least one of the layers (C1, C2, C3), for carrying out a cutting step, which is carried out after having repeated the deposition and fusion steps relative to the layer in question, and during which the strip(s) of the layer in question are cut on the peripheral border of their fused portions, along a corresponding contour (C1D, C2D, C3D) of the object (O).

7. The method according to any one of the preceding claims, **characterized in that** the method further provides, to produce at least one of the layers (C1, C2, C3), for carrying out a grinding step, which is carried out after having repeated the deposition and fusion steps relative to the layer in question, and during which the face of the strip(s) of the layer in question, which is turned, along the axis (Z), away from the layer previously produced or, if the latter is not present, away from the support (2), is flattened by removing material.

8. The method according to any one of the preceding claims, wherein, after having produced each layer (C1, C2, C3) and before producing the following layer, the angular orientation, around the first axis (Z), of the layer to be produced is modified relative to that of the layer previously produced.

9. The method according to any one of the preceding claims, wherein, after having produced at least several of the layers (C1, C2, C3), the peripheral border of at least some of the produced layers is machined transversely to the first axis (Z), in particular by micro-machining.

10. The method according to any one of the preceding claims, wherein a beam (L) of a laser (16) is applied on the strip(s) of each layer to be produced (C1, C2, C3) to carry out at least some, or even all of the fusion steps, as well as, if applicable, at least some, or even all of said cutting steps and/or said grinding steps and/or the welding operations of the respective lateral edges of said first and second strips.

11. The method according to any one of the preceding claims, wherein at least one resistance welding electrode is applied on the strip(s) of each layer to be produced (C1, C2, C3) to carry out at least some, or even all of the fusion steps as well as, if applicable, at least some, or even all of the welding operations of the respective lateral edges of said first and second strips.

12. A facility (1) for manufacturing a three-dimensional object,
including a device (10) suitable for producing, one after the other, planar layers (C1, C2, C3) such that each layer newly produced by the device is superimposed, along a first axis (Z) that is perpendicular to the respective planes of the layers, on a layer previously produced or, if the latter is not present, a planar metal support (2) that is perpendicular to the first axis (Z), each of the layers made by the device (10) being made up of at least one metal strip (F1C1, F2C1, F1C2, F2C2, F3C2, F1C3, F2C3) such that the or each strip of each layer occupies the entire thickness, along the axis (Z), of the corresponding layer, **characterized in that** the device (10) comprises:
- deposition means (12) that are suitable for pressing, along the axis (Z), part of the strip of a layer to be produced in contact against the layer previously produced or, if the latter is not present, against the support (2);
- fusion means (16) that are suitable for fusion welding, on the layer previously produced or, if the latter is not present, the support, only a portion, called fused, of the part, pressed by the deposition means, of the strip of a layer to be produced such that, after application of the fusion means, the rest of said part, which has not been fused, includes the edges of said part, arranged transversely to the plane of the layer to be produced, and is still in contact with the layer previously produced or, if the latter is not present, the support; and
- movement means that are suitable for moving, in a second axis (X) that is perpendicular to the first axis (Z), with respect to one another, the strip of a layer to be produced on the one hand and the deposition means and the fusion means on the other hand, so as to make it possible to apply the deposition means and the fusion means to several corresponding parts of the strip that are offset from one another in the second axis (X).

13. The facility according to claim 12, wherein the fusion means comprise a laser (16).

14. The facility according to one of claims 12 or 13, wherein the fusion means comprise at least one resistance welding electrode.
